(19) **Europäisches Patentamt European Patent Office Office européen des brevets**

(11) **EP 4 637 148 A1**

(12) **EUROPEAN PATENT APPLICATION**

(43) Date of publication:
22.10.2025 Bulletin 2025/43

(21) Application number: 24315181.8

(22) Date of filing: 16.04.2024

(51) International Patent Classification (IPC):
H04N 19/154 $^{(2014.01)}$  H04N 19/70 $^{(2014.01)}$
H04N 19/156 $^{(2014.01)}$  G06F 1/3234 $^{(2019.01)}$
G09G 5/00 $^{(2006.01)}$  H04N 19/46 $^{(2014.01)}$
H04N 19/85 $^{(2014.01)}$  H04N 21/443 $^{(2011.01)}$

(52) Cooperative Patent Classification (CPC):
H04N 19/46; G06F 1/3265; G09G 5/10;
H04N 19/154; H04N 19/156; H04N 19/70;
H04N 19/85; G09G 2320/0285; G09G 2330/021;
G09G 2370/04; H04N 19/21; H04N 19/29;
H04N 21/4436

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• Aumont, Franck
35770 VERN SUR SEICHE (FR)
• Demarty, Claire-Helene
35520 MONTREUIL LE GAST (FR)
• Le Meur, Olivier
35160 TALENSAC (FR)
• Blonde, Laurent
35235 THORIGNE-FOUILLARD (FR)
• Reinhard, Erik
35630 HEDE-BAZOUGES (FR)

(74) Representative: Interdigital
Immeuble ZEN 2
845 A, avenue des Champs Blancs
35510 Cesson-Sévigné (FR)

(54) **METHOD AND DEVICE FOR ENCODING AND DECODING ATTENUATION MAP FOR ENERGY AWARE IMAGES**

(57) A new metadata associated to a visual content is related to the use of a pixel-wise attenuation map dedicated to the reduction of the energy consumption when using the visual content, for example when rendering it on a display. Information about the types of displays compatible with the use of the attenuation map, the type of pre-processing (ex: up-sampling); the type of operation to use for the application of the attenuation map, some metrics of the expected energy reduction and on the expected quality impact of the use of such an attenuation map are provided. Specific parameters are related to a quality metric and a quality reduction. Parameters are carried by corresponding syntax elements in an SEI message. The pixel-wise attenuation map for one image of the video may be carried over as an auxiliary image of a specific type and encoded conventionally. Encoding and decoding methods and devices are described.

Figure 5

**Description**

**TECHNICAL FIELD**

The disclosure is in the field of video compression, and at least one embodiment relates more specifically to encoding and decoding a video comprising attenuation map information and corresponding parameters allowing a reduction of the energy consumption when using the video, for example when rendering it on a display.

**BACKGROUND ART**

Reducing energy consumption of electronic devices has become a requirement not only for manufacturers of electronic devices but also to limit, as much as possible, the environmental impact and to contribute to the emergence of a sustainable display industry. The increase in display resolution from SD to HD, then to 4K and soon to 8K and beyond, as well as the introduction of high dynamic range imaging, has brought about a corresponding increase in energy requirements of display devices. This is not consistent with the global need to reduce energy consumption knowing that a huge number of devices has a display (i.e., TV, Mobile phones, tablets, etc.). Indeed, displays are the most important source of energy consumption for consumer electronic devices, either battery-powered (e.g., smartphones, tablets, head-mounted displays, car display screens) or not (e.g., television sets, advertisement display panels).

Different display technologies have been developed in the recent years. Although modem displays consume energy in a more controllable and efficient manner than older displays, they remain the most important source of energy consumption in a video chain.

As far as backlight displays are concerned, their energy consumption is largely determined by the intensity of the backlight.

Organic Light Emitting Diode (OLED) is one example of display technology that is finding increasingly widespread use because of numerous advantages compared to former technologies such as Thin-Film Transistor Liquid Crystal Displays (TFT-LCDs). Rather than using a uniform backlight, OLED displays, as well as mini LEDS, are composed of individual directly emissive image pixels. OLED's power consumption is therefore highly correlated to the image content and the power consumption for a given input image can be estimated by considering the values of the displayed image pixels. Although OLED displays consume energy in a more controllable and efficient manner, they are still the most important source of energy consumption in the video chain.

To achieve high compression efficiency, image and video coding schemes usually employ prediction and transform to leverage spatial and temporal redundancy in the video content. Generally, intra or inter prediction is used to exploit the intra or inter frame correlation, then the differences between the original picture block and the predicted picture block, often denoted as prediction errors or prediction residuals, are transformed, quantized and entropy coded. To reconstruct the video, the compressed data is decoded by inverse processes corresponding to the entropy coding, quantization, transform, and prediction.

**SUMMARY**

In general, at least one example of an embodiment involves a new metadata associated to a visual content and related to the use of a pixel-wise attenuation map dedicated to the reduction of the energy consumption when using the visual content, for example when rendering it on a display. Information about the types of displays compatible with the use of the attenuation map, the type of pre-processing (ex: up-sampling); the type of operation to use for the application of the attenuation map, some metrics of the expected energy reduction and on the expected quality impact of the use of such an attenuation map are provided. These parameters are carried by corresponding syntax elements in an SEI message. The pixel-wise attenuation map for one image of the video may be carried over as an auxiliary image of a specific type and encoded conventionally. Encoding and decoding methods and devices are described.

A first aspect is directed to a method comprising obtaining encoded data comprising at least an image, an attenuation map and a set of parameters, wherein the set of parameters comprise at least a first parameter representative of an operation for applying the attenuation map to an image, and a second parameter representative of a mapping between components of the attenuation map and image components affected by the operation, determining an attenuated image with reduced component values by applying the attenuation map to the image through an operation based on the first parameter on components of the image selected based on the second parameter and providing an attenuated image.

A second aspect is directed to a method comprising obtaining an input image of a video, determining an attenuation map based on the input image according to a selected energy reduction rate, wherein applying the attenuation map to the input image reduces values of components of the input image, generating an encoded video comprising at least the input image, the attenuation map and a set of parameters, wherein the set of parameters comprises at least a first parameter representative of an operation for applying the attenuation map to an image, and a second parameter representative of a mapping between components of the attenuation map and image components affected by the operation.

A third aspect is directed to a device comprising a processor configured to obtain encoded data comprising at least an image, an attenuation map and a set of parameters, wherein the set of parameters comprise at least a first parameter representative of an operation for applying the attenuation map to an image, and a second parameter representative of a mapping between components of the attenuation map and image components affected by the operation, determine an attenuated image with reduced component values by applying the attenuation map to the image through an operation based on the first parameter on components of the image selected based on the second parameter and provide an attenuated image.

A fourth aspect is directed to a device comprising a processor configured to obtain an input image of a video, determine an attenuation map based on the input image according to a selected energy reduction rate, wherein applying the attenuation map to the input image reduces values of components of the input image, generate an encoded video comprising at least the input image, the attenuation map and a set of parameters, wherein the set of parameters comprises at least a first parameter representative of an operation for applying the attenuation map to an image, and a second parameter representative of a mapping between components of the attenuation map and image components affected by the operation.

A fifth aspect is directed to a non-transitory computer readable medium containing data content generated according to the second aspect.

A sixth aspect is directed to non-transitory computer readable medium containing comprising instructions which, when the program is executed by a computer, cause the computer to carry out the described embodiments related to the first and second aspect.

A seventh aspect is directed to a computer program comprising instructions which, when the program is executed by a computer, cause the computer to carry out any of the described embodiments or variants related to the first and second aspect.

The above presents a simplified summary of the subject matter in order to provide a basic understanding of some aspects of the present disclosure. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description provided below.

## BRIEF SUMMARY OF THE DRAWINGS

The present disclosure may be better understood by consideration of the detailed description below in conjunction with the accompanying figures in which:

Figure 1 illustrates a block diagram of a video encoder according to an embodiment.
Figure 2 illustrates a block diagram of a video decoder according to an embodiment.
Figure 3 illustrates a block diagram of an example of a system in which various aspects and embodiments are implemented.
Figure 4 illustrates flowcharts of two examples of video encoding using attenuation map information according to at least one embodiment.
Figure 5 illustrates a flowchart of an example of video decoding using attenuation map information according to at least one embodiment.
Figure 6 illustrates a flowchart of an example of video decoding using attenuation map information carried by an auxiliary picture of type AUX_ALPHA according to at least one embodiment.
Figure 7 illustrates a flowchart of an example of video encoding using attenuation map information carried by an auxiliary picture of type AUX_ALPHA with two SEI messages: a first SEI message for the alpha_channel_info and another dedicated SEI message for the attenuation_map_info according to at least one embodiment.
Figure 8 illustrates a flowchart of an example of video decoding using attenuation map information carried by an alpha plane with dedicated SEI message according to at least one embodiment corresponding to the encoding of figure 7.
Figure 9 illustrates a flowchart of an example of video decoding using attenuation map based on multiple components carried by separate auxiliary pictures according to at least one embodiment.

It should be understood that the drawings are for purposes of illustrating examples of various aspects, features and embodiments in accordance with the present disclosure and are not necessarily the only possible configurations. Throughout the various figures, like reference designators refer to the same or similar features.

## DETAILED DESCRIPTION

The present aspects, although describing principles related to particular drafts of VVC (Versatile Video. Coding) or to HEVC (High Efficiency Video Coding) specifications, are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

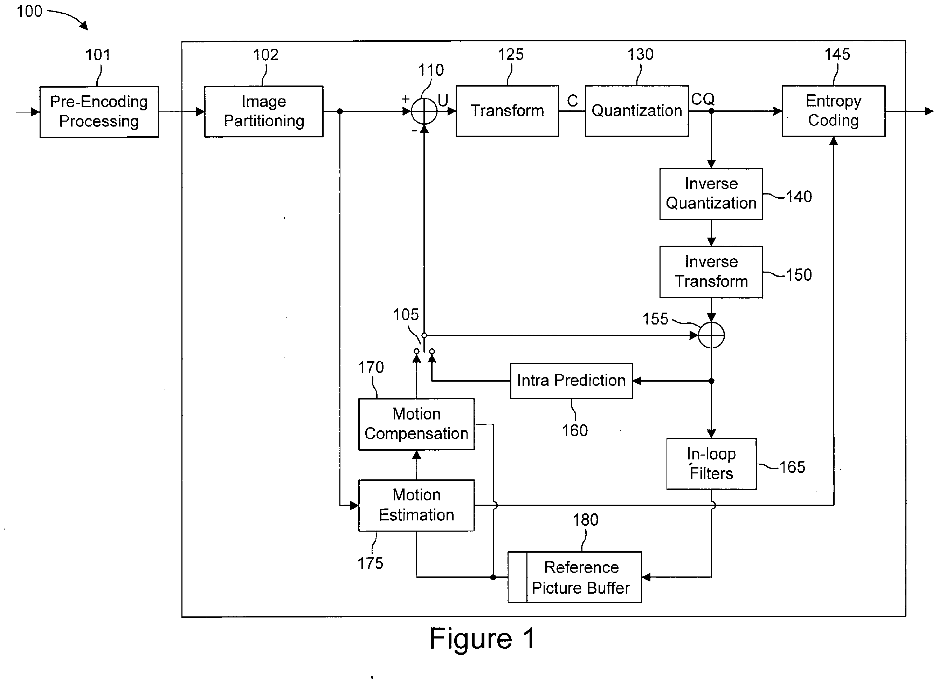

**Figure 1** illustrates a block diagram of a video encoder according to an embodiment. Variations of this encoder 100 are contemplated, but the encoder 100 is described below for purposes of clarity without describing all expected variations. Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (180).

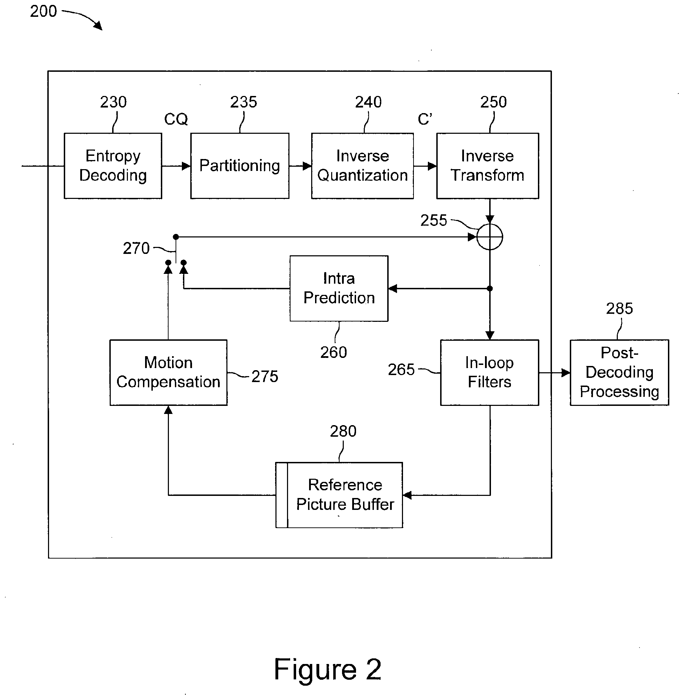

**Figure 2** illustrates a block diagram of a video decoder according to an embodiment. In the decoder 200, a bitstream is decoded by the decoder elements as described below. Video decoder 200 generally performs a decoding pass reciprocal to the encoding pass. The encoder 100 also generally performs video decoding as part of encoding video data. In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

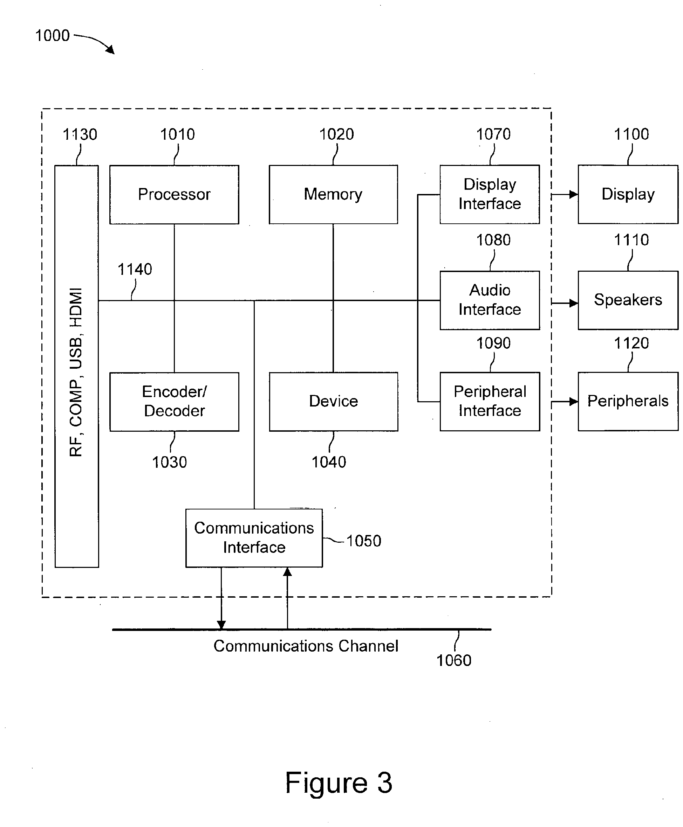

**Figure 3** illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. The processor 1010 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 3, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other devices. The display 1100 can also be integrated with other components (for example, as in a smart phone), or separate (for example, an external monitor for a laptop). The other peripheral devices 1120 include, in various examples of embodiments, one or more of a standalone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

ISO/IEC 23001-11 specifies metadata (Green Metadata) that facilitate the reduction of energy usage during media consumption, and specifically demonstrates how to reduce the power consumption at the display side by using a display adaptation mechanism. The metadata for display adaptation defined in the Green Metadata specification are designed for a specific display technology and are particularly well tailored to transmissive display technologies embedding backlight illumination such as LCD displays. These metadata are designed to attain display energy reductions by using display adaptation techniques. They are composed of metrics made of RGB-component statistics and quality indicators of the video content. They can be used to perform RGB picture components rescaling to set the best compromise between backlight/voltage reduction and picture quality. The specified metadata differ depending on whether the use case is point-to-point transmission or point-to-multipoint transmission.

If it is assumed that the power consumption of OLED screens is linear with luminance, such statistics conveyed in these metadata can be helpful in the context of OLED screens. However, this approach is far from optimal, as these metadata convey global information. Furthermore, they do not convey any information that would guide the use of a pixel-wise attenuation map.

Since the ISO/IEC 23001-11 document was published new emissive technologies have been introduced with the spread of emissive OLED displays, which allow a pixel-wise and more efficient control of their energy consumption, and for example to reduce the energy consumption.

A User data Supplemental Enhancement Information (SEI) message, as defined by ITU-T Recommendation T.35 (ISO/IEC FDIS 23002-7 Information technology - MPEG video technologies - Part 7: Versatile supplemental enhancement information messages for coded video bitstreams), in combination with ISO/IEC 14496-10 for AVC or ISO/IEC DIS 23008-2 for HEVC or ISO/IEC FDIS 23002-7 for VVC, allows to convey extra information, which can be received in accurate synchronization with the related audio and video content.

Some of the metadata conventionally carried over SEI messages defined by the T.35 recommendation could be related to display adaptation.

Implementation of pixel-wise dimming processes of images to reduce the energy are usually done either at the receiver (e.g., post-processing operation) or at the server side (e.g., pre-processing operation), with the consequence of having several limitations and drawbacks.

Part of this processing can be done independently of any information that is provided at the decoder or display side. Therefore, to be further in line with the goal of limiting the impact of the video chain on climate change, embodiments described herein propose to factorize only once the construction of the attenuation map at the encoder side, and to send this map together with the content, in the form of some auxiliary picture, instead of multiplying the processing in each device or server of the transmission chain. In this case, accompanying metadata are also required in the encoded bit-stream, to provide additional information on its use at the receiver side.

Additionally, methods to compute attenuation maps can be costly. In this case, splitting the full process in two steps (e.g., first the computation of the attenuation map at the encoder side, and second, its use at the decoder side) can advantageously enable its use even for devices with low computational resources such as smartphones. Furthermore, information, such as the display type, is however useful to adapt the application of the attenuation map on the picture to display. This suggests a process in two steps.

If done fully at the receiver or display side, the resulting images after energy reduction will not necessarily respect the content creator's intent because some areas might be impacted by the application of a dimming map created without any control from the content creator and the quality of experience could be degraded. On the other hand, if prepared during the content creation, content creators can assess that the processing is compliant with their quality of experience requirements and indicate areas that should not be affected by the processing.

Embodiments described hereafter have been designed with the foregoing in mind and propose to solve these issues defining new metadata associated with a visual content and related to the use of a pixel-wise attenuation map dedicated to the reduction of the energy consumption when using the visual content, for example when rendering it on a display. For example, information about the types of displays compatible with the use of the attenuation map, the type of pre-processing (ex: up-sampling) and operation to use for the application of the attenuation map and some indicative metrics of the expected energy reduction and on the expected quality impact of the use of such an attenuation map are provided and specified as syntax elements in an SEI message. The pixel-wise attenuation map for one image of the video may be carried over as an auxiliary image of a specific type and encoded conventionally.

The granularity of the signaled metadata can be based on time (i.e., data are signaled per period/duration of the video content), temporal layers (i.e., data are signaled per temporal layer), slice type (intra and inter slices), parts of the picture (slices, tiles). The SEI message is generated at the encoder, based on parameters related to the attenuation map. The encoder signals this information in the SEI message, which is also included in the bitstream. The SEI message and the attenuation map are decoded by the decoder and the decoded image is modified such that the energy consumption is reduced.

The attenuation map is designed so that, when applied to an input image, it produces a modified image that requires less energy for display than the input image. One simple implementation is to scale down the luminance according to a selected energy reduction rate. More complex implementation takes other parameters into account such as the similarity between the modified image and the input image, or the contrast sensitivity function of the human vision, or a smoothness characteristic that allows to downscale the attenuation map without introducing heavy artefacts when upscaling it on the decoder side, etc.

Applying an attenuation map to an image is based on combining them according to a selected type of operation.

The values of the samples of the attenuation map and the type of operation are closely related. Indeed, when the operation is an addition, the attenuation map comprises sample values having negative values, when the operation is a subtraction, the attenuation map comprises sample values having positive values, when the operation is a multiplication, the attenuation map comprises floating point sample values in a range between zero (pixel becomes black) and one (no attenuation).

Auxiliary pictures are defined in ISO/IEC 23002-3 Auxiliary Video Data Representations. Table 1 illustrates the addition of a new specific type of auxiliary picture named "AUX_ATTENUATION" that will be used in relation with the new metadata defined above. This new type comes in addition to the conventional types of auxiliary pictures related to alpha plane and picture depth information.

Table 1

| sdi_aux_id[ i ] | Name | Type of auxiliary pictures |
|---|---|---|
| 1 | AUX_ALPHA | Alpha plane |
| 2 | AUX DEPTH | Depth picture |
| 3 | AUX_ATTENUATION | Attenuation picture |
| 4..127 | | Reserved |
| 128..255 | | Unspecified |

Table 2 below gives a basic example of the metadata carried by the SEI message and comprising the parameters necessary to the use of an attenuation map sent as an auxiliary picture in the bitstream.

In this example, it is considered that some metadata are sent globally for the full bitstream, i.e., that they are shared for all auxiliary pictures of type "attenuation map". These metadata can also be shared in a period, where the concept of period can correspond for example to a picture, an Intra period, Group of Pictures (GOP), number of pictures, time duration, and for all. The SEI message is then typically inserted per period. It is transmitted at the start of an upcoming period. The next message containing the metadata will be transmitted at the start of the next upcoming period. Therefore, when the upcoming period is a picture, a message will be transmitted for each picture. However, when the upcoming period is a specified time interval or a specified number of pictures, the associated message will be transmitted with the first picture in the time interval or with the first picture in the specified number of pictures.

In another embodiment, part of the information related to the auxiliary picture of type attenuation map can be sent globally for the full bitstream (e.g., information related to the display models compatible with the use of the attenuation maps) and other information can be sent with a different periodicity, e.g., for each picture.

Table 2

| Syntax | |
|---|---|
| attenuation_map_info ( payloadSize ) { | **Descriptor** |
| **ami_cancel_flag** | u(1) |
| if ( !ami_cancel_flag ) { | |
| **ami display_model** | u(4) |
| **ami_global_flag** | u(1) |
| **ami_map_approximation_model** | u(4) |
| **ami_map_number** | u(4) |
| for ( i=0;i<ami_map_number;i++ ) { | |
| **ami_layer_id[i]** | u(8) |
| **ami_ols_number[i]** | u(4) |
| **for ( j=0;j<ami_ols_number[i];j++){** | |
| **ami_ols_id[i][ j ]** | u(8) |
| } | |
| **ami_energy_reduction_rate[ i ]** | u(8) |

(continued)

| Syntax | |
|---|---|
| attenuation_map_info ( payloadSize ) { | **Descriptor** |
| **ami video_quality[i]** | u(8) |
| **ami_max_value[i]** | u(16) |
| if ( !ami_global_flag ) or (i ==0 ) { | |
| **ami_attenuation_use_idc[i]** | u(4) |
| **ami_attenuation_comp_idc[i]** | u(4) |
| **ami_preprocessing_flag[i]** | u(1) |
| if( ami_preprocessing_flag[i] ){ | |
| **ami_preprocessing_type_idc[i]** | u(4) |
| } | |
| **ami_preprocessing_scale_idc[ i ]** | u(8) |
| **ami_backlight_scaling_idc[ i ]** | u(4) |
| } | |
| } | |
| } | |
| } | |

The metadata of table 2 may be described as follows:

- **ami_cancel_flag** is used to cancel the persistence of any previous attenuation map information SEI message, thus providing a kind of reset information to the decoder. When this flag is equal to 1, it indicates that the SEI message cancels the persistence of any previous attenuation map Information SEI message in output order. When equal to 0, it indicates that attenuation map Information parameters follow.

- **ami_display_model** indicates on which type of display technology the attenuation map should be applied at the receiver side. This metadata is a bit field mask which indicates the display models on which the attenuation map sample values of the auxiliary picture as shown in the table 3. For example, ami_display_model="0011" means the attenuation map Information can be used for both "Backlit pixel" (i.e., backlit) and "Emissive pixel" display models.

Table 3

| Bit number | Display model |
|---|---|
| 0 | Backlit pixel |
| 1 | Emissive pixel |
| 2..3 | Reserved for future types |

- **ami_global_flag** indicates whether all the following information data have to be redefined for each decoded auxiliary picture of type AUX_ATTENUATION or not. When this flag is equal to 0, it indicates that ami_attenuation_use_idc[ i ], ami_attenuation_comp_idc[ i ], ami_preprocessing_flag[ i ], ami_preprocessing_type_idc[ i ], ami_preprocessing_scale_idc[ i ], ami_backlight_scaling_idc[ i ] for i=0.. ami_map_number, shall be present. When this flag is equal to 1, it indicates that only ami_attenuation_use_idc[ 0 ], ami_attenuation_comp_idc[ 0 ], ami_preprocessing_flag[ 0 ], ami_preprocessing_type_idc[ 0 ], ami_preprocessing_scale_idc[ 0 ], ami_backlight_scaling_idc[ 0 ] shall be present.

- **ami_map_number** indicates the number of attenuation maps contained in the metadata. Indeed, it is interesting to send more than one map, that will serve as control points in a further interpolation process, in case the end user desires to use an attenuation map with a different reduction rate than the one(s) provided.

- **ami_map_approximation_model** indicates which type of interpolation models should be used to infer an attenuation map of a different reduction rate than the one(s) corresponding to the attenuation map(s) sent in the metadata. When this parameter is equal to 0, a linear scaling of the attenuation map sample values of the provided auxiliary picture given its respective ami_energy_reduction_rate is considered to obtain corresponding attenuation map sample values for another energy reduction rate. In case several auxiliary pictures of type attenuation map are provided, the auxiliary picture with the lowest ami_energy_reduction_rate is used for the linear scaling. When this parameter is equal to 1, a bilinear interpolation between the Attenuation Map sample values of the provided auxiliary picture(s) given their respective ami_energy_reduction_rate should be considered to obtain corresponding Attenuation Map sample values for another energy reduction rate. Similarly, other values of this parameter will specify the use of other models for the interpolation, as summarized in the table 4 below.

Table 4

| ami_map_approximation_model | attenuation_map_interpolation_process |
|---|---|
| 0 | Linear scaling |
| 1 | Bilinear interpolation |
| 2 | Lanczos interpolation |
| 3 | Bicubic interpolation |
| 4 | User defined |
| 5..15 | Reserved for future uses |

- **ami_layer_id[i]** specifies the identifier of the decoder Layer for the attenuation map of index i.
- **ami_ols_number[i]** specifies the number of Output Layer Sets to which the decoder layer for the attenuation map of index i belongs.
- **ami_ols_id[i][j]** specifies the identifier of the Output Layer Set of index j for the attenuation map of index i. This identifier shall be used to select the Output Layer Set to output both the primary decoded picture and the Attenuation Map of index i.
- **ami_energy_reduction_rate[i]** indicates for a given attenuation map the corresponding level of energy reduction that can be expected from the use of the attenuation map. The value of this parameter specifies the energy reduction rate expressed in percentage.
- **ami_video_quality[i]** indicates for a given attenuation map the corresponding quality than can be expected after using the attenuation map to reduce the energy of the decoded image. am_video_quality[i] can be PSNR, V-MAF or SSIM values for example. Such quality metrics can be computed by the decoder but, for the sake of reducing the energy consumption, they could also be inferred at the encoder side. In this case, they could correspond to values of expected minimal quality.
- **ami_max_value[i]** indicates the maximum value of the attenuation map of index i. Such a maximal value can be optionally used to further adjust the dynamic of the encoded attenuation map in the scaling process.
- **ami_attenuation_use_idc[i]** indicates which type of processing should be used to apply the transmitted attenuation map of index i on the decoded image to be displayed, as summarized in table 5 below. For example, the attenuation map can bebe combined with the decoded image using subtraction, addition, multiplication or division, so that it reduces the level of the pixel values of the decoded image. When this parameter is equal to 0, the attenuation map sample values of the decoded auxiliary picture of index i should be added to one or more associated primary picture decoded sample(s) before displayed on screen. This case implies that the values of the attenuation map are negative. When this parameter is equal to 1, the attenuation map sample values of the decoded auxiliary picture should be subtracted from one or more associated primary picture decoded sample(s). When this parameter is equal to 2, the attenuation map sample values of the decoded auxiliary picture should be multiplied by one or more associated primary picture decoded sample(s) before displayed on screen. When this parameter is equal to 3, the decoded sample(s) should be divided by the associated attenuation map sample values of the decoded auxiliary picture before displayed on screen. When this parameter is equal to 4, the attenuation map sample values of the decoded auxiliary picture should be used in the context of a contrast sensitivity function to determine the attenuation to be applied to one or more associated primary picture decoded sample(s) before being displayed on screen. When this parameter is equal to 5, the attenuation map sample values of the decoded auxiliary picture should be used according to a proprietary user defined process to modify the one or more associated primary picture decoded sample(s) before displayed on screen.

Table 5

| ami_attenuation_use_idc[ i ] | Process to apply on associated primary picture decoded samples |
|---|---|
| 0 | Addition |
| 1 | Subtraction |
| 2 | Multiplication |

(continued)

| ami_attenuation_use_idc[ i ] | Process to apply on associated primary picture decoded samples |
|---|---|
| 3 | Division |
| 4 | Contrast Sensitivity Function |
| 5 | User defined |
| 6..15 | Reserved for future uses |

The range and type of attenuation map values depends on the type of combination, i.e., a floating-point value smaller or equal to 1.0 when the combination is a multiplication, a floating-point value greater than or equal to 1.0 when the combination is a division, a positive integer value when the combination is a subtraction, or a negative integer value when the combination is an addition.

- **ami_attenuation_comp_idc[i]** specifies on which color component(s) of the associated primary picture(s) decoded samples the decoded auxiliary picture of type AUX_ATTENUATION of index i should be applied using the process defined by ami_attenuation_use_idc[ i ]. It also specifies how many components the decoded auxiliary picture of index i should contain.

When equal to 0, the decoded auxiliary picture of type AUX_ATTENUATION of index i contains only one component and this component should be applied to the luma component of the associated primary picture(s) decoded samples. When equal to 1, the decoded auxiliary picture of type AUX_ATTENUATION of index i contains only one component and this component should be applied to the luma component and the chroma components of the associated primary picture(s) decoded samples.

When equal to 2, the decoded auxiliary picture of type AUX_ATTENUATION of index i contains only one component and this component should be applied to the RGB components (after YUV to RGB conversion) of the associated primary picture(s) decoded samples.

When equal to 3, the decoded auxiliary picture of type AUX_ATTENUATION of index i contains two components and the first component should be applied to the luma component of the associated primary picture(s) decoded samples and the second component should be applied to both chroma components of the associated primary picture(s) decoded samples.

When equal to 4, the decoded auxiliary picture of type AUX_ATTENUATION of index i contains three components and that these components should be applied respectively to the luma and chroma components of the associated primary picture(s) decoded samples.

When equal to 5, the decoded auxiliary picture of type AUX_ATTENUATION of index i contains three components and these components should be applied respectively to the RGB components (after YUV to RGB conversion) of the associated primary picture(s) decoded samples.

When equal to 6, the mapping between the components of the decoded auxiliary picture of type AUX_ATTENUATION of index i and the components of which to apply the decoded auxiliary picture of type AUX_ATTENUATION of index i corresponds to some proprietary user-defined process. This is summarized in table 6 below.

Table 6

| ami_attenuation_comp_idc[ i ] | Mapping between components of the attenuation map and primary picture components on which to apply the attenuation map |
|---|---|
| 0 | One component in the attenuation map is applied to the luma component (Y=>Y) of the associated primary picture |
| 1 | One component in the attenuation map is applied to the luma and chroma components of the associated primary picture |
| 2 | One component in the attenuation map is applied to the three RGB components of the associated primary picture |
| 3 | Two components in the attenuation map are applied as:<br>    - First component to luma component<br>    - Second component to the chroma components<br>of the associated primary picture |
| 4 | Three components in the attenuation map are applied respectively to luma and chroma components of the associated primary picture |

(continued)

| ami_attenuation_comp_idc[ i ] | Mapping between components of the attenuation map and primary picture components on which to apply the attenuation map |
|---|---|
| 5 | Three components in the attenuation map are applied to the respective RGB components of the associated primary picture |
| 6 | User defined |
| 7..15 | Reserved for future uses |

- **ami_preprocessing_flag[i]** When this flag is true, it specifies the use of pre-processing on the attenuation map sample values of the decoded auxiliary picture of index i. In that case, it is supposed that the pre-processing is an up-sampling operation and that the auxiliary coded picture(s) and the primary coded picture have different size.

- **ami_preprocessing_type_idc[i]** indicates which type of preprocessing is to be applied to the attenuation map sample values of the decoded auxiliary picture of index i. When this parameter is equal to 0, the interpolation between the attenuation map sample values of the provided auxiliary picture of index i considered to obtain the attenuation map sample values to apply to the sample values of the decoded picture is a bicubic interpolation to retrieve the same resolution as the one of the associated decoded picture. When this parameter is equal to 1, the interpolation is a bilinear interpolation and when equal to 2, the interpolation is of type Lanczos. When this parameter is equal to 3, a proprietary user defined process should be used. This is summarized in the table 7 below.

Table 7

| ami_preprocessing_type_idc[ i ] | attenuation map preprocessing type |
|---|---|
| 0 | **Bicubic** interpolation |
| 1 | Bilinear interpolation |
| 2 | Lanczos interpolation |
| 3 | User defined |
| 4..15 | Reserved for future uses |

- **ami_preprocessing_scale_idc[i]** specifies the scaling that is to be applied to the attenuation map samples of index i to get the attenuation map sample values (float) before applying them to the sample values of the decoded picture. When this parameter is equal to 0, a scaling of $\frac{1}{255}$ should be applied. When this parameter is equal to 1, a proprietary user defined scaling should be used. This is summarized in table 8 below.

Table 8

| ami_preprocessing_scale_idc[ i ] | attenuation map scaling preprocess |
|---|---|
| 0 | Scaling of $\frac{1}{255}$ |
| 1 | User defined |
| 2..15 | Reserved for future uses |

- **ami_backlight_scaling_idc[ i ]** specifies the process to compute the scaling factor of the backlight of transmissive pixel displays, derived from the Attenuation Map sample values of the decoded auxiliary picture of index i. When equal to 0, the scaling to apply to the backlight of the display is computed as the ratio between the maximal values of the associated primary picture decoded samples after and before applying the attenuation map sample values of the decoded auxiliary picture of index i. The associated primary picture decoded sample(s) on which the attenuation map sample values of the decoded auxiliary picture of index i are applied are further rescaled to their maximal value before the application of the attenuation map sample values of the decoded auxiliary picture of index i.

When greater than 0, the scaling to apply to the backlight of the display is determined according to a proprietary user defined process derived from the Attenuation Map sample values of the decoded auxiliary picture of index i. This is summarized in table 9 below.

Table 9

| ami_backlight_scaling_idc [ i ] | Backlit scaling processing type |
|---|---|
| 0 | Scaling by the ratio between maximal values before and after the use of the Attenuation Map |
| 1..15 | Reserved for future uses |

In the case where the periodicity of the SEI messages corresponds to parts of the pictures, additional metadata are added that define to which region of the decoded picture the attenuation map sample values of the auxiliary picture should be applied. In this case, the syntax is then modified as illustrated in table 10 below.

Table 10

| Syntax | Descriptor |
|---|---|
| attenuation_map_info ( payloadSize ) { | |
|     ami_cancel_flag | u(1) |
|     if ( !ami_cancel_flag ) { | |
|         ami display_model | u(4) |
|         ami_global_flag | u(1) |
|         ami_map_approximation_model | u(4) |
|         ami_box_xstart | u(8) |
|         ami_box_ystart | u(8) |
|         ami_box_width | u(8) |
|         ami_box_height | u(8) |
|         ami_map_number | u(4) |
|         for ( i=0;i<ami_map_number;i++ ){ | |
|           ami_layer_id[i] | u(8) |
|           ami_ols_number[i] | u(4) |
|           for ( j=0;j<ami_ols_number[i];j++){ | |
|             ami_ols_id[i][ j ] | u(8) |
|           } | |
|           ami_energy_reduction_rate[ i ] | u(8) |
|           ami video_quality[i] | u(8) |
|           ami_max_value[i] | u(16) |
|         if ( !ami_global_flag ) or ( i ==0 ) { | |
|           ami_attenuation_use_idc[i] | u(4) |
|           ami_attenuation_comp_idc[i] | u(4) |
|           ami_preprocessing _flag[i] | u(1) |
|           if( ami_preprocessing_flag[i] ){ | |
|             ami_preprocessing_type_idc[i] | u(4) |
|           } | |
|           ami_preprocessing_scale_idc[ i ] | u(8) |
|           ami_backlight_scaling_idc[ i ] | u(4) |

(continued)

| Syntax | |
|---|---|
| } | |
| } | |
| } | |
| } | |

The new metadata ami_box_xstart, ami_box_ystart, ami_box_width, ami_box_height define the position and the size of a bounding box defining the region of the decoded picture to apply the attenuation map, respectively the x coordinate, y coordinate of the video top left corner for example, width and height of the bounding box. The attenuation map is not applied outside of this bounding box.

An alternative to this embodiment for region-based attenuation maps is to set the sample values of an attenuation map to 0 (if these samples are added or subtracted) or 1 (if these samples are multiplied) out of the region on which the attenuation map should be applied. In this case, these additional metadata are not needed.

An alternative to this embodiment for video quality information and, as illustrated in the Table 11, is to provide the video quality metric am_video_quality_metric[i] and as a value for the ami_video_quality_reduction [i], the quality loss after applying the attenuation map. This parameter is expressed as percentage value of reduction of quality according to the selected quality metric am_video_quality_metric[i] in comparison with its nominal value. With this information, the transmitter is able to select the best compromise between the video quality and the energy reduction.

Table 11

| Syntax | Descriptor |
|---|---|
| attenuation_map_info ( payloadsize ) { | |
| ami_cancel_flag | u(1) |
| if ( !ami_cancel_flag ) { | |
| ami display_model | u(4) |
| ami_global_flag | u(1) |
| ami_map_approximation_model | u(4) |
| ami_box_xstart | u(8) |
| ami_box_ystart | u(8) |
| ami_box_width | u(8) |
| ami_box_height | u(8) |
| ami_map_number | u(4) |
| for ( i=0;i<ami_map_number;i++ ){ | |
| ami_layer_id[i] | u(8) |
| ami_ols_number[i] | u(4) |
| for ( j=0;j<ami_ols_number[i];j++){ | |
| ami_ols_id[i][ j ] | u(8) |
| } | |
| ami_energy_reduction_rate[ i ] | u(8) |
| ami video_quality_metric[i] | u(3) |
| ami video_quality_reduction[i] | u(8) |
| ami_max_value[i] | u(16) |
| if ( !ami_global_flag) or (i ==0 ) { | |
| ami_attenuation_use_idc[i] | u(4) |

(continued)

| Syntax | |
|---|---|
| ami_attenuation_comp_idc[i] | u(4) |
| ami_preprocessing_flag[i] | u(1) |
| if( ami_preprocessing_flag[i] ){ | |
| ami_preprocessing_type_idc[i] | u(4) |
| } | |
| ami_preprocessing_scale_idc[ i ] | u(8) |
| ami_backlight_scaling_idc[ i ] | u(4) |
| } | |
| } | |
| } | |
| } | |

The ami_video_quality_metric[i] parameter indicates the quality metric used to indicate the loss of the video quality after applying the attenuation map.

Table 12

| ami_video_quality_metric field value | Metric name |
|---|---|
| 0x00 | PSNR |
| 0x01 | SSIM |
| 0x02 | wPSNR |
| 0x03 | WS-PSNR |
| 0x04 | V-MAF |
| 0x05..0x07 | Reserved for future metrics |

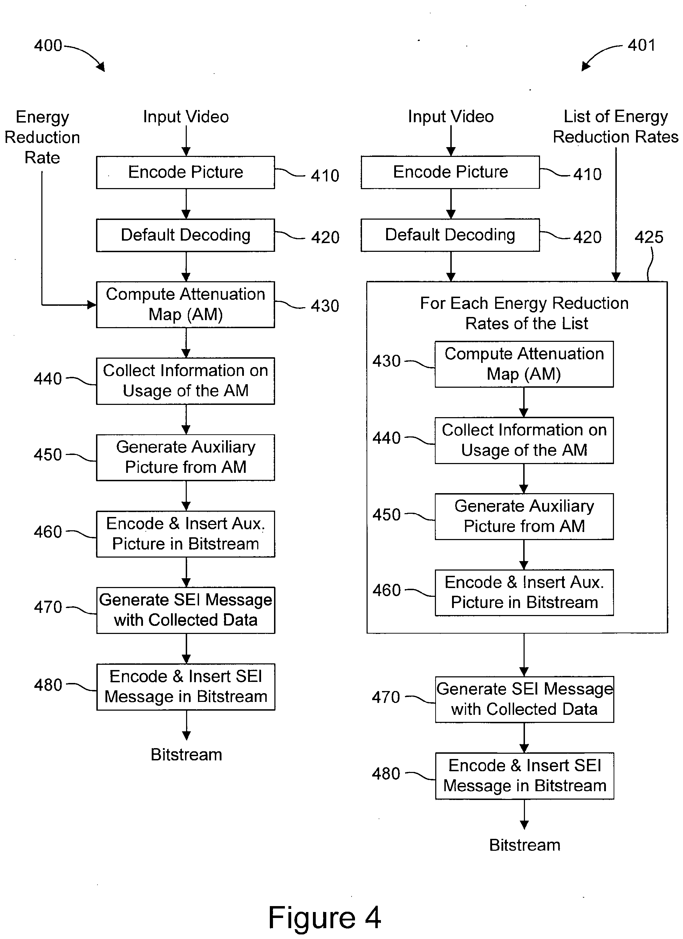

**Figure 4** illustrates flowcharts of two examples of video encoding using attenuation map information according to at least one embodiment. This encoding process 400 is implemented for example by an encoder 100 of figure 1 or a processor 1010 in a device 1000 of figure 3. The figure describes the SEI message generation and the bitstream encapsulation process according to an embodiment, performed for example during the encoding, in compliance with the syntax introduced above. In this embodiment, the SEI message is inserted for a given picture, i.e., the considered period corresponds to one picture. In step 410, the device encodes the picture conventionally, resulting in a partial bitstream. In step 420, the device performs conventional partial bitstream decoding. In step 430, an attenuation map corresponding to the decoded picture is computed for a selected energy reduction rate. In step 440, data corresponding to the parameters described in table 1 are collected, for example about the use of the attenuation map, the expected energy reduction, the corresponding expected quality, the pre-processing operation, etc. In step 450, the auxiliary picture corresponding to the attenuation map is generated and, in step 460, encoded, and inserted in the partial bitstream. Once all data are collected, they are inserted in the SEI message in step 470. The SEI message is encoded and inserted in the final bitstream in step 480. In variant embodiments, the ordering of some of the steps may be altered, still relying on the same principles. For example, all the encoding steps may be performed in the same step. In another example, step 440 is done between steps 460 and 470.

As introduced earlier, this bitstream comprises at least an image of the video and in relation with this image, an attenuation map that corresponds to a selected energy reduction rate. This allows a decoding device (or a display device) to determine from this bitstream an image of the video that will allow a reduction of the energy consumption when using (e.g., displaying) the video.

In at least one embodiment, a plurality of attenuation maps are computed respectively for different energy reduction rates. For example, two attenuation maps with energy reduction rates $R_1$ and $R_2$ may be computed. This allows to interpolate a corresponding attenuation map at the decoder side for any other reduction rate R such as $R_1 < R < R_2$. The process 401 of figure 4 illustrates a flowchart of such embodiment. Most of the steps are identical to the steps of the process 400. The difference is related to the iteration 425 that is done for a selected set of energy reduction rates. Thus, an attenuation map is generated for each of the energy reduction rates and the set of corresponding auxiliary pictures with their accompanying informative data are inserted into the bitstream.

As a result of this embodiment, the bitstream comprises at least an image of the video and in relation with this image, a set of different attenuation maps that correspond to a set of selected energy reduction rates. This allows a decoding device (or a display device) to determine from this bitstream an image of the video that will allow a reduction of the energy consumption when displaying the video according to an energy reduction rate not in the list of reduction rates, thanks to the plurality of attention maps and parameters in the SEI message of the bitstream.

Again, the ordering of some of the steps can be changed while still being based on the same principles. For example, all auxiliary pictures may be inserted at once, outside of the loop on energy reduction rates. Another example consists of inserting an SEI message per auxiliary picture, i.e., inside the loop on energy reduction rates.

In another embodiment, the computation of the attenuation map and the collection of the associated metadata is realized outside of the encoder, for example in a dedicated device, and these data are for example stored in a database accessible by the encoder. These additional data are then provided to the encoder together with the input video in a process similar to the processes 400 and 401.

In another embodiment, the auxiliary data is sent without any accompanying SEI message and thus without having in the bitstream the parameters to benefit from the attenuation map. This use case targets specific decoding devices that have a predetermined behavior. An example of such device is an advertisement display panel. In this case, a default mode is defined with the default values for these parameters. There is persistence of these values for the whole bitstream. The default values are illustrated in table 13.

Table 13

| Parameter | Default value |
|---|---|
| ami_display_model | Bit 1 |
| ami_map_number | 1 |
| ami_map_approximation_model | 0 |
| ami_global_flag | 1 |
| ami_attenuation_use_idc[0] | 0 |
| ami_attenuation_comp_idc[0] | 0 |
| ami_preprocessing flag[0] | 0 |
| ami_preprocessing_type_idc[0] | 0 |
| ami_preprocessing_scale_idc[0] | 0 |
| ami_energy_reduction_rate[0] | 10 |
| ami video_quality[0] | 40 |
| ami_layer_id [0] | 1 |
| ami_ols_number[0] | 2 |
| ami_ols_id[0][0] | 0 |
| ami_ols_id[0][1] | 1 |
| ami_backlight_scaling_idc | 0 |

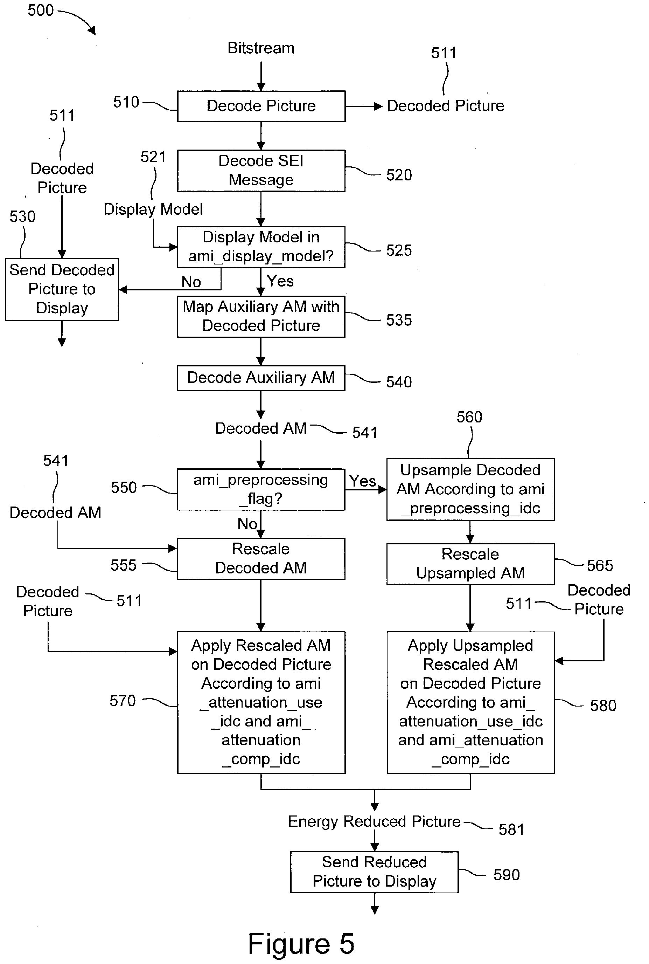

**Figure 5** illustrates a flowchart of an example of video decoding using attenuation map information according to at least one embodiment. This decoding process 500 is implemented for example by a decoder 200 of figure 1, by a processor 1010 in a device 1000 of figure 3 or by various electronic devices such as smartphones, tablet computers, digital multimedia set top boxes, digital television receivers, personal video recording systems, connected home appliances, personal computers, laptop computers, and servers.

As introduced above, the usage of the attenuation map is guided by the accompanying metadata carried by SEI message. The process 500 can be applied to a picture or to a group of pictures or to a part of a picture (slice, tile), according to the level of signaling of the SEI message as described above. The following description illustrates the case where the process is applied to a single picture and there is only one attenuation map, but the other cases are similar and based on the same steps.

In step 510, the picture is decoded from the bitstream, producing a decoded picture 511. In step 520, the SEI message data are retrieved from the bitstream for a picture and provide the different parameters as described according to the syntax as described in table 2. In step 525, the display model 521 of the end device is checked against the decoded parameter ami_display_model. If the display model 521 of the end device is not compatible with the ami_display_model parameter, the decoded picture 511 is sent directly to the display in step 530 without any use of the attenuation map. Otherwise, in step 535, a mapping with the auxiliary data of type attenuation map and its corresponding decoded picture is done by the use of ami_ols_id[ **i** ][ j ] which gives the identifiers of the layers, within the bitstream, containing the decoded picture and the attenuation map. Within these identifiers, ami_layer_id[i] will give the layer id in which the attenuation map is. In step 540, the auxiliary data of type attenuation map corresponding to the picture is decoded, producing a decoded attenuation map 541. In step 550, ami_preprocessing_flag is checked to get the information whether upsampling should be applied to the decoded attenuation map 541. In step 560, in case upsampling is to be applied, the decoded attenuation map 541 is upsampled according to the process given by the parameter ami_preprocessing_idc. In step 565, it is further rescaled according to some scaling factor described by ami_preprocessing_scale_idc and ami_max_value. Then, in step 580, the upsampled and rescaled attenuation map is applied on the decoded picture 511 according to the process described by ami_attenuation_use_idc and ami_attenuation_comp_idc to produce an energy reduced image 581 that is further sent to the display in step 590. In case no upsampling of the decoded attenuation map 541 is required, it is first rescaled according to a scaling factor described by ami_preprocessing_scale_idc and ami_max_value in step 555. Then, the rescaled attenuation map is applied on the decoded picture 511 in step 570 according to the process described by ami_attenuation_use_idc and ami_attenuation_comp_idc to produce an energy reduced image 581 that is further sent to the display in step 590. Optionally, in case the device display is a backlight display, the ami_backlight_scaling_idc information is further sent to the display, so that a further scaling of the display backlight and a rescaling of the reduced image dependent on the attenuation map are done according to a process described by ami_backlight_scaling_idc.

In at least one embodiment, a single bit field named **ami_flags** is used to convey a plurality of information flags:

- bit 0: indicates that the SEI message cancels the persistence of any previous Attenuation Map Information SEI message in output order. It corresponds to the previously defined **ami_cancel_flag.**
- bit 1: indicates whether all the following information data in the message have to be redefined for each decoded auxiliary picture of type AUX_ATTENUATION or not. It corresponds to the previously defined **ami_global_flag.**
- bit 2: indicates whether the following Attenuation maps in the message can be used for approximating other Attenuation Maps for other reduction rates. It corresponds to a new **ami_approximation_flag.**
- bit 3: indicates whether preprocessing is required to use the following Attenuation Maps in the message. It corresponds to a new **ami_preprocessing_global_flag.**
- bit 4: indicates that the Attenuation Maps in the message shall be applied to a region of the primary video. This region is defined respectively by the x, y coordinates of the top left corner and the width and height of the region bounding box. It corresponds to a new **ami_box_flag.**
- bit 5: indicates that the Attenuation Maps in the message shall be used to derive some backlight scaling. It corresponds to a new **ami_backlightscaling_flag.**
- bit 6:
- bit 6-7: reserved for future use.

The ami_flags bit field is summarized in Table 14.

Table 14

| bit 6-7 | bit 5 | bit 4 | bit 3 | bit 2 | bit 1 | bit 0 |
|---|---|---|---|---|---|---|
| Future use | ami_backlightscaling_fl ag | ami_box_ flag | ami_preprocessing_ global_flag | ami_approximate flag | ami_global_ flag | ami_cancel_flag |

The ami_flags bit field allows to reduce the size of the SEI message by not sending the metadata information that is not needed to use and apply the Attenuation Maps. In this case, the syntax in table 10 is then modified as illustrated in table 15 below.

Table 15

| Syntax | |
| --- | --- |
| attenuation_map_info ( payloadsize ) { | Descriptor |
| **ami_flags** | u(8) |
| if ( ami_flags && 0x01 != 0x01 ) { | |
| **ami_display_model** | u(4) |
| if ( ami_flags && 0x04 == 0x04) { | |
| **ami_map_approximation_model** | u(4) |
| } | |
| if ( ami_flags && 0x10 == 0x10) { | |
| **ami_box_xstart** | u(8) |
| **ami_box_ystart** | u(8) |
| **ami_box_width** | u(8) |
| **ami_box_height** | u(8) |
| } | |
| **ami_map_number** | u(4) |
| for ( i=0;i<ami_map_number;i++ ){ | |
| **ami_layer_id[i]** | u(8) |
| **ami_ols_number[i]** | u(4) |
| **for ( j=0;j<ami_ols_number[i];j++){** | |
| **ami_ols_id[i][ j ]** | u(8) |
| } | |
| **ami_energy_reduction_rate[ i ]** | u(8) |
| **ami video_quality[i]** | u(8) |
| **ami_max_value[i]** | u(16) |
| if ( ami_flags && 0x02 != 0x02 ) or ( i == 0 ) { | |
| **ami_attenuation_use_idc[i]** | u(4) |
| **ami_attenuation_comp_idc[i]** | u(4) |
| if ( ami_f!ags && 0x08 == 0x08 ) { | |
| **ami_preprocessing flag[i]** | u(1) |
| If ( ami_preprocessing_flag[i] ){ | |
| **ami_preprocessing_type_idc[i]** | u(4) |
| } | |
| **ami_preprocessing_scale_idc[ i ]** | u(8) |
| } | |
| if ( ami_flags && 0x20 == 0x20 ){ | |
| **ami_backlight_scaling_idc[ i ]** | u(4) |
| } | |

(continued)

| Syntax | |
|---|---|
| } | |
| } | |
| } | |
| } | |

As an alternative, the bit 6 of the ami_flags is used to indicate if the video quality information is present in the SEI message, i.e. am_video_quality_metric[i] and ami_video_quality_reduction [i], as illustrated in the Table 16 and 17.

Table 16

| Syntax | Descriptor |
|---|---|
| attenuation_map_info ( payloadsize ) { | |
| **ami_flags** | u(8) |
| if ( ami_f!ags && 0x01 != 0x01 ) { | |
| **ami display_model** | u(4) |
| if ( ami_flags && 0x04 == 0x04) { | |
| **ami_map_approximation_model** | u(4) |
| } | |
| if ( ami_flags && 0x10 == 0x10) { | |
| **ami_box_xstart** | u(8) |
| **ami_box_ystart** | u(8) |
| **ami_box_width** | u(8) |
| **ami_box_height** | u(8) |
| } | |
| **ami_map_number** | u(4) |
| for ( i=0;i<ami_map_number;i++ ){ | |
| **ami_layer_id[i]** | u(8) |
| **ami_ols_number[i]** | u(4) |
| **for ( j=0;j<ami_ols_number[i];j++{** | |
| **ami_ols_id[i][ j ]** | u(8) |
| } | |
| **ami_energy_reduction_rate[ i ]** | u(8) |
| if ( ami_flags && 0x40 == 0x40 ) { | |
| { | |
| **ami video_quality_metric[i]** | u(3) |
| **ami_video_quality_reduction[i]** | u(8) |
| } | |
| **ami_max_value[i]** | u(16) |
| if ( ami_f!ags && 0x02 != 0x02 ) or ( i == 0 ) { | |
| **ami_attenuation_use_idc[i]** | u(4) |
| **ami_attenuation_comp_idc[i]** | u(4) |

(continued)

| Syntax | |
|---|---|
| if ( ami_f!ags && 0x08 == 0x08 ) { | |
| **ami_preprocessing_flag[i]** | u(1) |
| If ( ami_preprocessing_flag[i] ){ | |
| **ami_preprocessing type idc[i]** | u(4) |
| } | |
| **ami_preprocessing_scale_idc[ i ]** | u(8) |
| } | |
| if ( ami_flags && 0x20 == 0x20 ){ | |
| **ami_backlight_scaling_idc[ i ]** | u(4) |
| } | |
| } | |
| } | |
| } | |
| } | |

In such embodiment, accordingly, the ami_flags comprise an additional bit (bit #6) called ami_video_quality_flag that indicates whether the Video Quality information is present in the message, as illustrated in Table 17. In this case, the ami_video_quality_metric[i] (see table 12) and ami_video_quality_reduction [i] syntax elements will be present. The other elements of the ami_flags are identical to the ones described above with reference to table 14.

Table 17

| bit 7 | bit 6 | bit 5 | bit 4 | bit 3 | bit 2 | bit 1 | bit 0 |
|---|---|---|---|---|---|---|---|
| Future use | **ami_video_quality flag** | ami _backlightscaling_flag | ami_box_flag | ami_preprocessing_global_flag | ami_approxima te flag | ami_global_ flag | ami_cancel_flag |

In at least one embodiment, one SEI message is sent per attenuation map instead of grouping metadata for multiple attenuation maps into one SEI. Therefore, if three attenuation maps need to be provided, then three SEI messages need to be provided also. However, in this embodiment, each SEI message is simpler. Indeed, the metadata ami_global_flag and ami_map_number are no more needed. The encoding process remains similar to the processes 400 and 401 of figure 4. The syntax for such embodiment is illustrated in table 18.

Table 18

| Syntax | |
|---|---|
| attenuation_map_info ( payloadsize ) { | **Descriptor** |
| **ami_cancel_flag** | u(1) |
| if ( !ami_cancel_flag ) { | |
| **ami_display_model** | u(4) |
| **ami_map_approximation_model** | u(4) |
| **ami_layer_id** | u(8) |
| **ami_ols_number** | u(4) |
| **for ( j=0;j<ami_ols_number;j++){** | |
| **ami_ols_id[ j ]** | u(8) |
| } | |
| **ami_energy_reduction_rate** | u(8) |
| **ami_video_quality** | u(8) |
| **ami_max_value** | u(16) |
| **ami_attenuation_use_idc** | u(4) |
| **ami_attenuation_comp_idc** | u(4) |
| **ami_preprocessing flag** | u(1) |
| if( ami_preprocessing flag){ | |
| **ami_preprocessing_type_idc** | u(2) |
| } | |
| **ami_preprocessing scale** | u(8) |
| } | |
| } | |

In at least one embodiment, no ami_global_flag is used. In such embodiment, all metadata are sent for all Attenuation Maps in ami_map_number. The syntax is then modified as illustrated in table 19.

Table 19

| Syntax | |
|---|---|
| attenuation_map_info ( payloadsize ) { | **Descriptor** |
| **ami_cancel_flag** | u(1) |
| if ( !ami_cancel_flag ) { | |
| **ami_display_model** | u(4) |
| **ami_map_approximation_model** | u(4) |
| **ami_map_number** | u(4) |
| for ( i=0;i<ami_map_number;i++ ) { | |
| **ami_layer_id[i]** | u(8) |

(continued)

| Syntax | |
|---|---|
| _ols_number[i] | u(4) |
| for ( j=0;j<ami_ols_number[i];j++){ | |
| ami_ols_id[i][ j ] | u(8) |
| } | |
| ami_energy_reduction_rate[ i ] | u(8) |
| ami_video_quality[i] | u(8) |
| ami_max_value[i] | u(16) |
| ami_attenuation_use_idc[i] | u(4) |
| ami_attenuation_comp_idc[i] | u(4) |
| ami_preprocessing flag[i] | u(1) |
| if( ami_preprocessing_flag[i] ){ | |
| ami_preprocessing_type_idc[i] | u(2) |
| } | |
| ami_preprocessing_scale[ i ] | u(8) |
| } | |
| } | |
| } | |

In at least one embodiment, the attenuation maps are carried over existing alpha plane pictures. In other words, rather than using the sdi_aux_id of value 3 corresponding to a new type AUX_ATTENUATION, the sdi_aux_id of value 1 is used, referring to the use of an auxiliary picture of type AUX_ALPHA. Such pictures are conventionally used for alpha blending, i.e., overlaying a second (alpha) image over a first image according to a transparency level.

Such an auxiliary picture of type AUX_ALPHA is accompanied by a standardized SEI message which contains the following metadata as defined in documents ISO/IEC 23002-3 or ITU-T H.265, ITU-T H.274.

- alpha_channel_cancel_flag equal to 1 indicates that the SEI message cancels the persistence of any previous ACI SEI message in output order that applies to the current layer. alpha_channel_cancel_flag equal to 0 indicates that ACI follows.

- alpha_channel_use_idc equal to 0 indicates that for alpha blending purposes the decoded samples of the associated primary picture should be multiplied by the interpretation sample values of the decoded auxiliary picture in the display process after output from the decoding process. alpha_channel_use_idc equal to 1 indicates that for alpha blending purposes the decoded samples of the associated primary picture should not be multiplied by the interpretation sample values of the decoded auxiliary picture in the display process after output from the decoding process. alpha_channel_use_idc equal to 2 indicates that the usage of the auxiliary picture is unspecified. Values greater than 2 for alpha_channel_use_idc are reserved for future use by ITU-T | ISO/IEC. When not present, the value of alpha_channel_use_idc is inferred to be equal to 2. Decoders shall ignore alpha channel information SEI messages in which alpha_channel_use_idc is greater than 2.

- alpha_channel_bit_depth_minus8 plus 8 specifies the bit depth of the samples of the luma sample array of the auxiliary picture. alpha_channel_bit_depth_minus8 plus 8 shall be equal to the bit depth of the associated primary picture.

- alpha_transparent_value specifies the interpretation sample value of a decoded auxiliary picture luma sample for which the associated luma and chroma samples of the primary coded picture are considered transparent for purposes of alpha blending. The number of bits used for the representation of the alpha_transparent_value syntax element is alpha_channel_bit_depth_minus 8 + 9.

- alpha_opaque_value specifies the interpretation sample value of a decoded auxiliary picture luma sample for which the associated luma and chroma samples of the primary coded picture are considered opaque for purposes of alpha blending. The number of bits used for the representation of the alpha_opaque_value syntax element is alpha_channel_bit_depth_minus 8 + 9.

A value of alpha_opaque_value that is equal to alpha_transparent_value indicates that the auxiliary coded picture is not intended for alpha blending purposes.

For alpha blending purposes, alpha_opaque_value can be greater than alpha_transparent_value or it can be less than or equal to alpha_transparent_value.

- alpha_channel_incr_flag equal to 0 indicates that the interpretation sample value for each decoded auxiliary picture luma sample value is equal to the decoded auxiliary picture sample value for purposes of alpha blending. alpha_channel_incr_flag equal to 1 indicates that, for purposes of alpha blending, after decoding the auxiliary picture samples, any auxiliary picture luma sample value that is greater than Min( alpha_opaque_value, alpha_transparent_value ) should be increased by one to obtain the interpretation sample value for the auxiliary picture sample and any auxiliary picture luma sample value that is less than or equal to Min( alpha_opaque_value, alpha_transparent_value ) should be used, without alteration, as the interpretation sample value for the decoded auxiliary picture sample value.

When alpha_transparent_value is equal to alpha_opaque_value or Log2( Abs( alpha_opaque_value - alpha_transparent_value ) ) does not have an integer value, alpha_channel_incr_flag shall be equal to 0.

- alpha_channel_clip_flag equal to 0 indicates that no clipping operation is applied to obtain the interpretation sample values of the decoded auxiliary picture. alpha_channel_clip_flag equal to 1 indicates that the interpretation sample values of the decoded auxiliary picture are altered according to the clipping process described by the alpha_channel_clip_type_flag syntax element.

- alpha_channel_clip_type_flag equal to 0 indicates that, for purposes of alpha blending, after decoding the auxiliary picture samples, any auxiliary picture luma sample that is greater than ( alpha_opaque_value + alpha_transparent_value ) / 2 is set equal to Max( alpha_transparent_value, alpha_opaque_value ) to obtain the interpretation sample value for the auxiliary picture luma sample and any auxiliary picture luma sample that is less or equal than ( alpha_opaque_value + alpha_transparent_value ) / 2 is set equal to Min( alpha_transparent_value, alpha_opaque_value ) to obtain the interpretation sample value for the auxiliary picture luma sample. alpha_channel_clip_type_flag equal to 1 indicates that, for purposes of alpha blending, after decoding the auxiliary picture samples, any auxiliary picture luma sample that is greater than Max( alpha_transparent_value, alpha_opaque_value ) is set equal to Max( alpha_transparent_value, alpha_opaque_value ) to obtain the interpretation sample value for the auxiliary picture luma sample and any auxiliary picture luma sample that is less than or equal to Min( alpha_transparent_value, alpha_opaque_value ) is set equal to Min( alpha_transparent_value, alpha_opaque_value ) to obtain the interpretation sample value for the auxiliary picture luma sample.

According to document ITU-T H.265: alpha_channel_use_idc equal to 2 indicates that the usage of the auxiliary picture is unspecified. Values greater than 2 for alpha_channel_use_idc are reserved for future use by ITU-T | ISO/IEC. When not present, the value of alpha_channel_use_idc is inferred to be equal to 2.

In the proposed current variant, alpha_channel_use_idc is set equal to 2 and the same additional metadata dedicated to the Attenuation Map, except ami_cancel_flag, are added to the SEI message for the Alpha Map as shown in Table 20.

Table 20

| Syntax | |
|---|---|
| alpha_channel_info( payloadSize ) { | Descriptor |
| alpha_channel_cancel_flag | u(1) |
| if( !alpha_channel_cancel_flag ) { | |
| alpha_channel_use_idc | u(3) |
| alpha_channel_bit_depth_minus8 | u(3) |
| alpha_transparent_value | u(v) |

(continued)

| Syntax | |
|---|---|
| alpha_opaque_value | u(v) |
| alpha_channel_incr_flag | u[1] |
| alpha_channel_clip_flag | u(1) |
| if( alpha_channel_clip_flag ) | |
|   alpha_channel_clip_type_flag | u(1) |
| if( alpha_channel_use_idc == 2 ) { | |
|   ami_display_model | u(4) |
|   ami_global_flag | u(1) |
|   ami_map_approximation_model | u(4) |
|   ami_map_number | u(4) |
|   for ( i=0;i<ami_map_number;i++ ) { | |
|    ami_layer_id[i] | u(8) |
|    ami_ols_number[i] | u(4) |
|    for ( j=0;j<ami_ols_number[i];j++){ | |
|     ami_ols_id[i][ j ] | u(8) |
|    } | |
|    ami_energy_reduction_rate[ i ] | u(8) |
|    ami_video_quality[i] | u(8) |
|    ami_max_value[i] | u(16) |
|    if ( !ami_global_flag ) or (i ==0 ) { | |
|     ami_attenuation_use_idc[i] | u(4) |
|    ami_attenuation_comp_idc[i] | u(4) |
|    ami_preprocessing _flag[i] | u(1) |
|    if( ami_preprocessing_flag[i] ){ | |
|     ami_preprocessing_type_idc[i] | u(2) |
|    } | |
|    ami_preprocessing_scale[ i ] | u(8) |
|    } | |
|   } | |
|  } | |
| } | |

The encoding process for such embodiment is similar to the processes 400 or 401 of figure 4 with some minor amendments. First, the auxiliary pictures generated in step 450 are auxiliary pictures of type AUX_ALPHA (i.e., with sdi_aux_id equal to 1) and the SEI message generated in step 470 first sets the value of alpha_channel_use_idc equal to 2. The other values related to the auxiliary picture of type AUX_ALPHA are set as follows:

- alpha_channel_bit_depth_minus8 : whatever value
- alpha_transparent_value : whatever value
- alpha_opaque_value = alpha_transparent_value
- alpha_channel_incr_flag = 0
- alpha_channel_clip_flag = 0

- alpha_channel_clip_type_flag: no need to send it

It then adds the metadata related to the Attenuation Map into the SEI message.

In a variant embodiment, the syntax of table 20 is adapted to support the case where the periodicity of the SEI messages corresponds to parts of the pictures. In this case, the syntax also comprises information related to the region where the attenuation map should be applied (xstart, ystart, width height), similar to the syntax of Table 10 or Table 15.

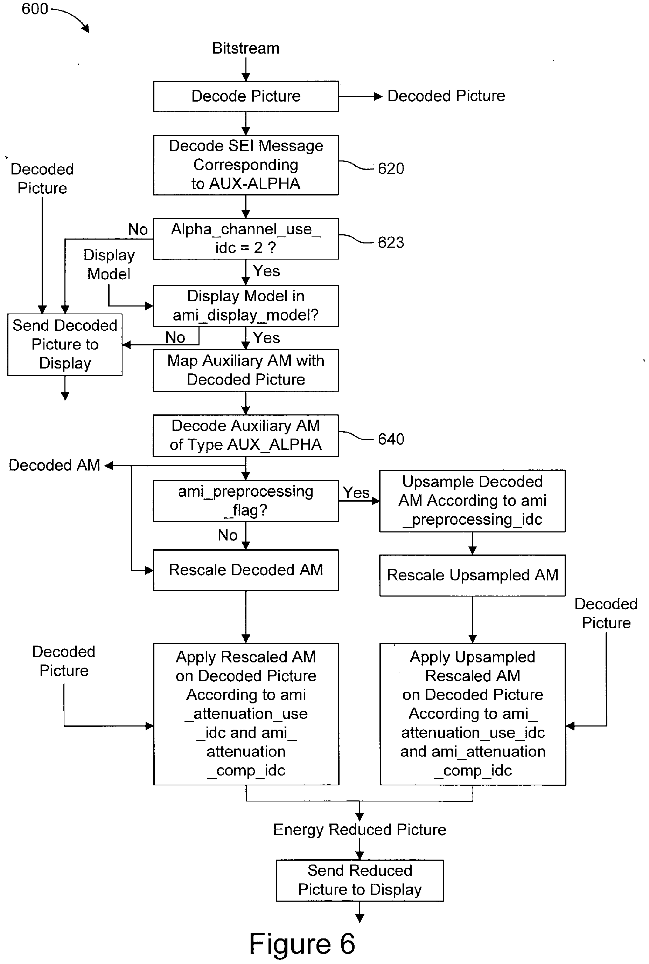

**Figure 6** illustrates a flowchart of an example of video decoding using attenuation map information carried by an auxiliary picture of type AUX_ALPHA according to at least one embodiment. This decoding process 600 is implemented for example by a decoder 200 of figure 2, by a processor 1010 in a device 1000 of figure 3 or by various electronic devices such as smartphones, tablet computers, digital multimedia set top boxes, digital television receivers, personal video recording systems, connected home appliances, personal computers, laptop computers, and servers. This decoding process 600 is very similar to the decoding process 500 of figure 5. The differences rely on the type of auxiliary data and the SEI messages. There are three differences in the decoding steps. First, in step 620, the processor decodes a SEI message corresponding to an auxiliary picture of type AUX_ALPHA (i.e., decoding an alpha_channel_info as described in table 20 instead of an attenuation_map_info of table 2). Second, an additional test in step 623 ensures that the alpha_channel_use_idc is set to 2 before pursuing the energy reduction process. If it is not the case ("No" branch), then a conventional decoding is performed, possibly using a conventional alpha blending operation. Third, the attenuation map data is decoded from an auxiliary picture of type AUX_ALPHA and not from an auxiliary picture of type AUX-ATTENUATION. The other steps are based on the same principles as the corresponding steps of figure 5.

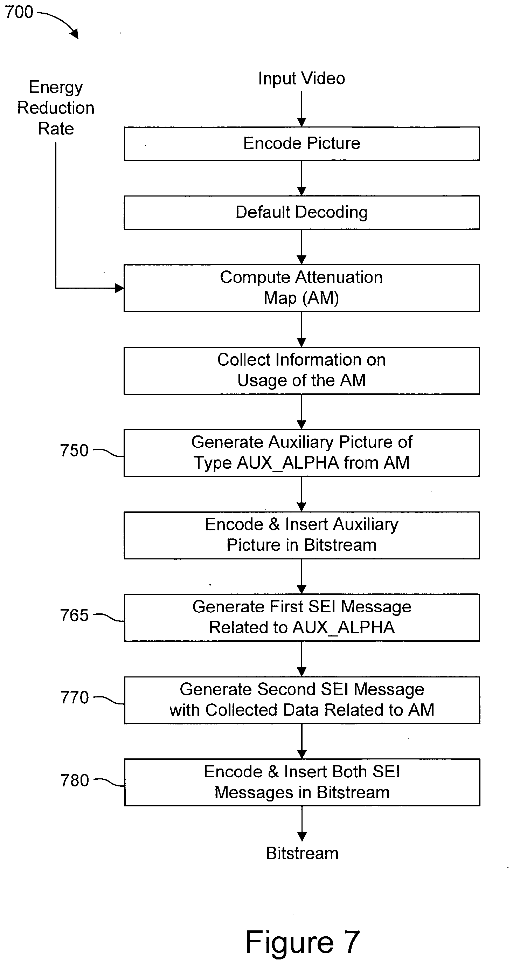

**Figure 7** illustrates a flowchart of an example of video encoding using attenuation map information carried by an auxiliary picture of type AUX_ALPHA with two SEI messages: a first SEI message for the alpha_channel_info and another dedicated SEI message for the attenuation_map_info according to at least one embodiment. In such embodiment, the Attenuation Map is encoded using an alpha plane, more particularly in an auxiliary picture of type AUX_ALPHA but the metadata is transmitted through an attenuation_map_info of table 2 instead of an alpha_channel_info as described in table 20. This is done by first setting the alpha map related SEI message for this auxiliary picture to the following values:

- alpha_channel_use_idc = 3
- alpha_channel_bit_depth_minus8 : whatever value
- alpha_transparent_value : whatever value
- alpha_opaque_value = alpha_transparent_value
- alpha_channel_incr_flag = 0
- alpha_channel_clip_flag = 0
- alpha_channel_clip_type_flag: no need to send it

The encoding process 700 is very similar to the encoding process 400 (or 401) of figure 4. The differences rely on the type of auxiliary data and the SEI messages. There are four differences in the encoding steps. First, the auxiliary picture generated in step 750 is an auxiliary picture of type AUX_ALPHA. Second, a first SEI message related to the alpha map is generated in step 765, notably with alpha_channel_use_idc set to '3' indicating that the alpha map should not be used conventionally. Third, a second SEI message comprises the metadata for using the attenuation map is generated in step 770 according to the attenuation_map_info syntax described in table 2. Fourth, both SEI messages are encoded and inserted in the bitstream.

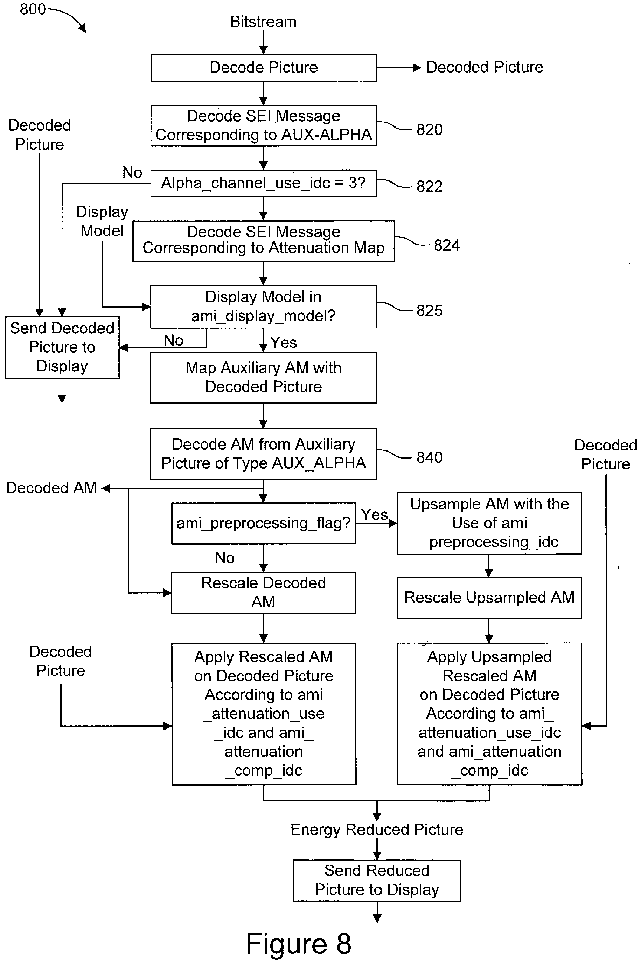

**Figure 8** illustrates a flowchart of an example of video decoding using attenuation map information carried by an alpha plane with dedicated SEI message according to at least one embodiment corresponding to the encoding of figure 7. This decoding process 800 is implemented for example by a decoder 200 of figure 2, by a processor 1010 in a device 1000 of figure 3 or by various electronic devices such as smartphones, tablet computers, digital multimedia set top boxes, digital television receivers, personal video recording systems, connected home appliances, personal computers, laptop computers, and servers. This decoding process 800 is very similar to the decoding process 500 of figure 5. As seen with the encoding process of figure 7, the differences rely on the type of auxiliary data and the SEI messages. First, in step 820, after decoding the first SEI message corresponding to the auxiliary picture of type AUX_ALPHA, it is checked that alpha_channel_use_idc is equal to 3. If alpha_channel_use_idc is equal to 3, the SEI message corresponding to the Attenuation Map is also decoded in step 824. If alpha_channel_use_idc is not equal to 3 ("No" branch in step 822), the energy reduction process is skipped, and a conventional video decoding is performed, possibly using a conventional alpha blending operation. Similarly, if no alpha map is received, the energy reduction process is also skipped and no attenuation is applied to the video. Another difference is found in step 840 where the attenuation map is decoded from an auxiliary picture of type AUX_ALPHA.

Steps 820, 822, 824, 825 can be inverted leading to the decoding of the SEI message corresponding to the AUX_ALPHA after the decoding of the SEI message corresponding to the interpretation of the Attenuation Map. In any case, the application of the attenuation process depends at least on the presence of both these SEI messages, on whether alpha_channel_use_idc = 3, on the type of display model and on the presence of some auxiliary picture of type AUX_ALPHA that corresponds to the SEI related message.

In at least one embodiment, the attenuation map uses multiple components and each of the component is stored and transmitted using a separate auxiliary picture, of type AUX_ATTENUATION or AUX_ALPHA. For example, three auxiliary pictures of type AUX_ATTENUATION are used, one per component Y, U, V of the Attenuation Map. In another example, two auxiliary pictures may be used, one for Y and another one for U and V. Any other combination can be envisioned. To enable such embodiment, the information provided by the encoder should comprise a mechanism to link multiple auxiliary pictures representing components of a full Attenuation Map, so that the full Attenuation Map can be reconstructed by the decoder before being applied to the primary video. In the current set of metadata sent in the SEI message, several sets of metadata (corresponding to one Attenuation Map) are sent: a total number of ami_map_number are considered and each set corresponds to an index i in the SEI message. Therefore, it is proposed that each component of the full Attenuation Map corresponds to an index within the ami_map_number metadata in the SEI. These indices will be used to link each component of the Attenuation Map. For this, additional metadata are needed that give the information of which auxiliary pictures should be used in combination, as individual components of the Attenuation Map:

- ami_comp_number[i]: indicates the number of additional auxiliary pictures needed to reconstruct the full Attenuation Map, from the Attenuation Map of index i, corresponding to one component of the full Attenuation Map.
- ami_comp_idc[i][j]: indicates the index of one other set of metadata (i.e., related to the Attenuation Map of index j), and corresponding to another component of the full Attenuation Map.

The list of ami_comp_idc[i][j] corresponds to the other indices of Attenuation Maps that, while linked with the Attenuation Map of index i will enable the reconstruction of the full Attenuation Map.

In such embodiment, the table 21 illustrates some additional values for the definition of the ami_attenuation_comp_idc[i] and replaces the table 6.

Table 21

| ami_attenuation_comp_idc[ i ] | Mapping between components of the Attenuation Map and primary picture components on which to apply the Attenuation Map |
|---|---|
| 0 | One component in the attenuation map is applied to the luma component of the associated primary picture |
| 1 | One component in the attenuation map is applied to the luma and chroma components of the associated primary picture |
| 2 | One component in the attenuation map is applied to the three RGB components of the associated primary picture |
| 3 | Two components in the attenuation map are applied as: |
| | First component to luma component<br>Second component to the chroma components of the associated primary picture |
| 4 | Three components in the attenuation map are applied to resp. luma and chroma components of the associated primary picture |
| 5 | Three components in the attenuation map are applied to resp. the RGB components of the associated primary picture |
| 6 | One component in the attenuation map is applied to the first component of the associated primary picture |
| 7 | One component in the attenuation map is applied to the second component of the associated primary picture |
| 8 | One component in the attenuation map is applied to the third component of the associated primary picture |
| 9 | User defined |
| 10..15 | Reserved for future uses |

In addition to the definitions of table 6, the following definitions are added in Table 21:

- ami_attenuation_comp_idc[ i ] equal to 6 specifies that the decoded auxiliary picture of type AUX_ATTENUATION of index i contains one component and this component should be applied to the first component of the associated primary picture(s) decoded samples.
- ami_attenuation_comp_idc[ i ] equal to 7 specifies that the decoded auxiliary picture of type AUX_ATTENUATION of index i contains one component and that this component should be applied to the second component of the associated primary picture(s) decoded samples.
- ami_attenuation_comp_idc[ i ] equal to 8 specifies that the decoded auxiliary picture of type AUX_ATTENUATION of index i contains one component and that this component should be applied to the third component of the associated primary picture(s) decoded samples.
- ami_attenuation_comp_idc[ i ] equal to 9 specifies that the mapping between the components of the decoded auxiliary picture of type AUX_ATTENUATION of index i and the components of which to apply the decoded auxiliary picture of type AUX_ATTENUATION of index i corresponds to some proprietary user-defined process.

This also impacts the definition of the Attenuation_map_info syntax compared to the former syntax described in Table 2. The ami_global_flag cannot be used in this embodiment, as it is needed to have separate values for ami_attenuation_comp_idc per attenuation map of index i. The new syntax is illustrated in Table 22. The same amendments (with regards to Table 2) can also be done to tables 18 and 19.

Table 22

| Syntax | Descriptor |
|---|---|
| attenuation_map_info ( payloadSize ) { | |
| **ami_cancel_flag** | u(1) |
| if ( !ami_cancel_flag ) { | |
| **ami_display-model** | u(4) |
| **ami_map_approximation_model** | u(4) |
| **ami_map_number** | u(4) |
| for ( i=0;i<ami_map_number;i++ ) { | |
| **ami_layer_id[i]** | u(8) |
| **ami_ols_number[i]** | u(4) |
| **for ( j=0;j<ami_ols_number[i];j++){** | |
| **ami_ols_id[i][ j ]** | u(8) |
| } | |
| **ami_comp_number[i]** | u(4) |
| **for ( j=0;j<ami_com_nb[i];j++){** | |
| **ami_comp_idc[i][ j ]** | u(8) |
| } | |
| **ami_energy_reduction_rate[ i ]** | u(8) |
| **ami video_quality[i]** | u(8) |
| **ami_max_value[i]** | u(16) |
| **ami_attenuation_use_idc[i]** | u(4) |
| **ami_attenuation_comp_idc[i]** | u(4) |
| **ami_preprocessing flag[i]** | u(1) |
| if( ami_preprocessing_flag[i] ){ | |
| **ami_preprocessing type idc[i]** | u(2) |
| } | |
| **ami_preprocessing_scale[ i ]** | u(8) |

(continued)

| Syntax | |
|---|---|
| } | |
| } | |
| } | |

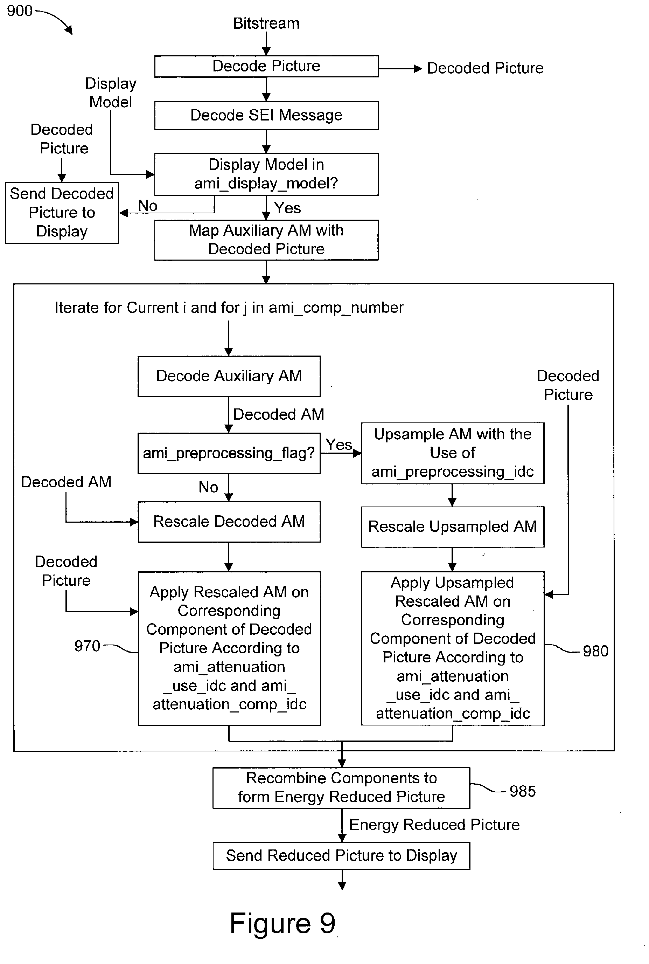

**Figure 9** illustrates a flowchart of an example of video decoding using attenuation map based on multiple components carried by separate auxiliary pictures according to at least one embodiment. This decoding process 900 is implemented for example by a decoder 200 of figure 2, by a processor 1010 in a device 1000 of figure 3 or by various electronic devices such as smartphones, tablet computers, digital multimedia set top boxes, digital television receivers, personal video recording systems, connected home appliances, personal computers, laptop computers, and servers. This decoding process 900 is very similar to the decoding process 500 of figure 5. In this embodiment, the differences rely mainly on an additional iteration to retrieve the separate attenuation map components, apply the separate attenuation map components in steps 970 and 980 to corresponding components of the decoded picture and combine the resulting components together in step 985.

This principle of using multiple components carried by separate auxiliary pictures can be applied to the embodiments related to tables 14 and 15, with the same amendments.

In at least one embodiment, the use of the attenuation map is disabled if the expected quality for the end device is higher than the quality given by ami_video_quality.

In at least one embodiment, in case a single attenuation map is provided, a given energy reduction rate R (i.e., corresponding to an expected Energy Reduction Rate) is checked against the ami_energy_reduction_rate provided in the SEI message. If this rate corresponds to the ami_energy_reduction_rate of the transmitted attenuation map, the corresponding attenuation map is applied to the decoded picture. If the energy reduction rate R is lower than the transmitted ami_energy_reduction_rate, a new attenuation map corresponding to R is inferred by extrapolating this new attenuation map from the transmitted attenuation map according to the process described by ami_map_approximation_model. An example of such a process can be a simple linear scaling of the attenuation map.

In at least one embodiment, if two attenuation maps are provided for two different ami_energy_reduction_rates $R_1$ and $R_2$, a given energy reduction rate $R$ is checked against rates $R_1$ and $R_2$. If this rate corresponds to one of rates $R_1$ and $R_2$, the corresponding processed attenuation map (as described in the previous embodiment) is applied on the decoded picture. If the energy reduction rate $R$ is such that that $R_1 < R < R_2$, a new attenuation map corresponding to $R$ is inferred by extrapolating this new attenuation map from the decoded attenuation maps corresponding to $R_1$ and $R_2$ according to the process described by ami_map_approximation_model. An example of such a process can be a pixel wise linear or a bicubic interpolation between the two attenuation maps corresponding to $R_1$ and $R_2$. If $R$ is bigger than both $R_1$ and $R_2$, some interpolation process on the attenuation map by linear scaling from the largest energy reduction rate can also be envisioned, but with no warranty on the resulting quality of the reduced picture. This embodiment is easily extended to more than two transmitted attenuation maps.

In at least one embodiment, the use of the attenuation map is disabled for some content pictures depending on: the image category (e.g., sport images, gaming images, etc.), the display settings (e.g., cinema mode, etc), etc.

In at least one embodiment, the method is disabled for specific content for which the energy reduction will not be significant. For example, dark content would lead to very low energy reduction whatever the technique. In this embodiment, the total amount of luminance per picture is computed and, when lower than a given threshold, the energy reduction method is disabled. Alternatively, this might be disabled per GOP, per shot, per movie.

In at least one embodiment, an additional check is added to verify that a pixel spatially belongs to a subset of the image to be processed, for example belonging to a region where the energy reduction is not desired. Such a region or mask can be based on, for example, a spatio-temporal just noticeable difference (JND) map, a motion field, a saliency map, a gaze tracking information or other pixel-wise information. When a pixel does not belong to this region or mask, the attenuation map is not applied to this pixel. This check can be done before or after the upsampling if any of the attenuation map.

In the case where some post-processing is applied on the decoded picture, such post-processing should be taken into account before applying the attenuation map. Two embodiments are possible. In at least one embodiment, some post-processing operations are taken into account while building the attenuation map. For example, this may be done in the process 400 by introducing an additional step between steps 420 and 430 to add a post processing operation on the decoded picture before building the attenuation map. In this case, at the receiver side, the attenuation map should be applied after all the post-processing operations. In at least one embodiment, these post-processing intervene independently of the encoding-decoding process and in this case, the attenuation map should be adapted to take these post-processing into account, before applying it on the decoded and post processed picture.

In the case where the attenuation map was computed on an input image in a given color gamut, the decoded picture should be converted to this color gamut before applying the attenuation map. At least one embodiment further comprises checking that the color gamut of the decoded picture corresponds to the color gamut while computing the attenuation map. This can be done by sending the color gamut of the attenuation map's computation together with the metadata.

For transmissive pixel displays, such as backlight displays for example, the attenuation map cannot be applied directly. However, it is possible to use the attenuation map to provide guidance to a backlight scaling algorithm. Indeed, for backlight displays, a strong contributor to the energy consumption of the display is the backlight.

In at least one embodiment, an attenuation map is applied on transmissive pixels displays by determining the minimal value, average value, or any other global value from the attenuation map and using this information to guide the backlight of the transmissive pixels displays. In the particular case of local dimming displays where the backlighting is split into different regions, the attenuation map could be previously split in regions corresponding to the local dimming regions of the display, before determining the minimal value, average value, or any other global value from the attenuation map and using this information to guide the backlight.

In at least one embodiment, the following steps are implemented. They correspond to ami_backlight_scaling_idc equal to 0. Apply the attenuation map to the image and determine the maximum luminance (or luma) values before and after applying the attenuation map. The ratio between these maxima determines the percentage by which the backlight can be dimmed. The image to which the attenuation map is applied is then rescaled to its original value and is then used to set the pixel values of the LED panel. This later form of backlight scaling allows either a stronger reduction of energy or a smaller reduction in visual quality than conventional backlight scaling methods, due to the non-linear nature of the attenuation map. If the backlight consists of a LED array, or of a tiled backlight, then the above method could be applied to sections of the back panel individually.

At least one example of an embodiment can involve a device including an apparatus as described herein and at least one of (i) an antenna configured to receive a signal, the signal including data representative of the image information, (ii) a band limiter configured to limit the received signal to a band of frequencies that includes the data representative of the image information, and (iii) a display configured to display an image from the image information.

At least one example of an embodiment can involve a device as described herein, wherein the device comprises one of a television, a television signal receiver, a set-top box, a gateway device, a mobile device, a cell phone, a tablet, a computer, a laptop, or other electronic device.

In general, another example of an embodiment can involve a bitstream or signal formatted to include syntax elements and picture information, wherein the syntax elements are produced, and the picture information is encoded by processing based on any one or more of the examples of embodiments of methods in accordance with the present disclosure.

In general, one or more other examples of embodiments can also provide a computer readable storage medium, e.g., a non-volatile computer readable storage medium, having stored thereon instructions for encoding or decoding picture information such as video data according to the methods or the apparatus described herein. One or more embodiments can also provide a computer readable storage medium having stored thereon a bitstream generated according to methods or apparatus described herein. One or more embodiments can also provide methods and apparatus for transmitting or receiving a bitstream or signal generated according to methods or apparatus described herein.

Many of the examples of embodiments described herein are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the embodiments, features, etc. can be combined and interchanged with others described in earlier filings as well.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

In general, the examples of embodiments, implementations, features, etc., described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. One or more examples of methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users. Also, use of the term "processor" herein is intended to broadly encompass various configurations of one processor or more than one processor.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, ' erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Various embodiments are described herein. Features of these embodiments can be provided alone or in any combination, across various claim categories and types.

**Claims**

1. A method comprising:

   - obtaining encoded data comprising at least an image, an attenuation map and a set of parameters, wherein the set of parameters comprises at least a first parameter representative of an operation for applying the attenuation map to an image, and a second parameter representative of a mapping between components of the attenuation map and image components affected by the operation;
   - determining an attenuated image with reduced component values by applying the attenuation map to the image through an operation based on the first parameter on components of the image selected based on the second parameter; and
   - providing the attenuated image,

   wherein the set of parameters further comprises a parameter representative of a quality metric and a parameter representative of a quality reduction.

2. A method comprising:

   - obtaining an input image of a video;
   - determining an attenuation map based on the input image according to a selected energy reduction rate, wherein applying the attenuation map to the input image reduces values of components of the input image; and
   - generating an encoded video comprising at least the input image, the attenuation map and a set of parameters, wherein the set of parameters comprises at least a first parameter representative of an operation for applying the attenuation map to an image, and a second parameter representative of a mapping between components of the attenuation map and image components affected by the operation,

   wherein the set of parameters further comprises a parameter representative of a quality metric and a parameter representative of a quality reduction.

3. The method of any of claim 1 or 2, wherein the set of parameters comprises at least a third parameter representative of a selected energy reduction rate.

4. The method of any of claims 1 to 3 wherein the set of parameters comprises at least a fourth parameter representative of the attenuation map, wherein the fourth parameter identifies the attenuation map in a set of auxiliary pictures carried in the bitstream.

5. The method of any of claims 1 to 4 wherein the first parameter is indicative of an operation in a set of operations comprising an addition, a subtraction, a multiplication, a contrast sensitivity function and a division.

6. The method of any of claims 1 to 5 wherein the second parameter is selected in a set comprising applying a component of the attenuation map to luma component, applying a component of the attenuation map to luma and both chroma components, applying a component of the attenuation map to three RGB components, applying a first component of the attenuation map to luma component and a second component of the attenuation map to both chroma components, applying three components of the attenuation map respectively to luma component and both chroma components, applying three components of the attenuation map respectively to three RGB components, applying one component of the attenuation map to the first component, applying one component of the attenuation map to the second component, and applying one component of the attenuation map to the third component.

7. The method of any of claim 1 to 6, wherein the image, the attenuation map and the set of parameters are carried in a bitstream.

8. The method of any of claims 1 to 7 wherein the set of parameters is carried by supplemental enhancement message according to a format specified in ISO/IEC FDIS 23002-7 and the attenuation map is carried by an auxiliary picture according to the format specified in ISO/IEC 23002-3 and ISO/IEC 14496-10 or ISO/IEC DIS 23008-2 or ISO/IEC FDIS 23002-7.

9. The method of claim 8 wherein the auxiliary picture carrying the attenuation map is an auxiliary picture for alpha blending identified as AUX_ALPHA in the format.

10. An apparatus comprising a processor configured to:

- obtain encoded data comprising at least an image, an attenuation map and a set of parameters, wherein the set of parameters comprises at least a first parameter representative of an operation for applying the attenuation map to an image, and a second parameter representative of a mapping between components of the attenuation map and image components affected by the operation;
- determine an attenuated image with reduced component values by applying the attenuation map to the image through an operation based on the first parameter on components of the image selected based on the second parameter; and
- provide the attenuated image,

wherein the set of parameters further comprises a parameter representative of a quality metric and a parameter representative of a quality reduction.

11. An apparatus comprising a processor configured to:

- obtain an input image of a video;
- determine an attenuation map based on the input image according to a selected energy reduction rate, wherein applying the attenuation map to the input image reduces values of components of the input image; and
- generate an encoded video comprising at least the input image, the attenuation map and a set of parameters, wherein the set of parameters comprises at least a first parameter representative of an operation for applying the attenuation map to an image, and a second parameter representative of a mapping between components of the attenuation map and image components affected by the operation,

wherein the set of parameters further comprises a parameter representative of a quality metric and a parameter representative of a quality reduction.

12. The apparatus of any of claims 10 or 11, wherein the device is one of a television, a television signal receiver, a set-top box, a gateway device, a mobile device, a cell phone, a tablet, a computer, a laptop, or other electronic device.

13. A computer program comprising instructions, which, when executed by a computer, cause the computer to carry out the method according to any of claims 1 to 9.

14. A non-transitory computer readable medium storing executable program instructions to cause a computer executing the instructions to perform a method according to any of claims 1 to 9.

Figure 1

200

| 230 | 235 | 240 | 250 |
|---|---|---|---|
| Entropy Decoding | Partitioning | Inverse Quantization | Inverse Transform |

Figure 2

1000

1130      1010         1020         1070         1100

| RF, COMP, USB, HDMI | Processor | Memory | Display Interface | Display |
|---|---|---|---|---|

1140

| | Encoder/ Decoder | Device | Audio Interface | Speakers |
|---|---|---|---|---|

1030        1040

1080        1110

1090        1120

Peripheral Interface — Peripherals

Communications Interface ~1050

Communications Channel

1060

Figure 3

400

Energy
Reduction
Rate

Input Video

↓

Encode Picture — 410

↓

Default Decoding — 420

↓

Compute Attenuation
Map (AM) — 430

↓

440 — Collect Information on
Usage of the AM

↓

450 — Generate Auxiliary
Picture from AM

↓

460 — Encode & Insert Aux.
Picture in Bitstream

↓

470 — Generate SEI Message
with Collected Data

↓

480 — Encode & Insert SEI
Message in Bitstream

↓

Bitstream

401

Input Video            List of Energy
Reduction Rates

↓                        ↓

Encode Picture — 410

↓

Default Decoding — 420          425

↓

For Each Energy Reduction
Rates of the List

430 — Compute Attenuation
Map (AM)

↓

440 — Collect Information on
Usage of the AM

↓

450 — Generate Auxiliary
Picture from AM

↓

460 — Encode & Insert Aux.
Picture in Bitstream

↓

470 — Generate SEI Message
with Collected Data

↓

480 — Encode & Insert SEI
Message in Bitstream

↓

Bitstream

# Figure 4

500

Bitstream

511

510 — Decode Picture ──→ Decoded Picture

511

Decoded Picture

521

Display Model

530

Decode SEI Message — 520

Display Model in ami_display_model? — 525

No ← | Yes

Send Decoded Picture to Display

Map Auxiliary AM with Decoded Picture — 535

Decode Auxiliary AM — 540

Decoded AM — 541

541

Decoded AM

560

Upsample Decoded AM According to ami_preprocessing_idc

550 — ami_preprocessing_flag? — Yes →

No

555 — Rescale Decoded AM

Rescale Upsampled AM — 565

Decoded Picture — 511

Decoded Picture — 511

570 — Apply Rescaled AM on Decoded Picture According to ami_attenuation_use_idc and ami_attenuation_comp_idc

Apply Upsampled Rescaled AM on Decoded Picture According to ami_attenuation_use_idc and ami_attenuation_comp_idc — 580

Energy Reduced Picture — 581

Send Reduced Picture to Display — 590

## Figure 5

600

Bitstream

→ Decode Picture → Decoded Picture

Decode SEI Message Corresponding to AUX-ALPHA — 620

Decoded Picture

No | Alpha_channel_use_idc = 2 ? — 623

Display Model

Yes

Display Model in ami_display_model?

No | Yes

Send Decoded Picture to Display

Map Auxiliary AM with Decoded Picture

Decode Auxiliary AM of Type AUX_ALPHA — 640

Decoded AM ◀

ami_preprocessing _flag? | Yes → Upsample Decoded AM According to ami _preprocessing_idc

No

Rescale Decoded AM

Rescale Upsampled AM

Decoded Picture

Decoded Picture

Apply Rescaled AM on Decoded Picture According to ami _attenuation_use _idc and ami_ attenuation _comp_idc

Apply Upsampled Rescaled AM on Decoded Picture According to ami_ attenuation_use_idc and ami_attenuation _comp_idc

Decoded Picture

Energy Reduced Picture

Send Reduced Picture to Display

# Figure 6

40

700

Energy
Reduction
Rate

Input Video

↓

Encode Picture

↓

Default Decoding

↓

Compute Attenuation
Map (AM)

↓

Collect Information on
Usage of the AM

↓

750 — Generate Auxiliary Picture of
Type AUX_ALPHA from AM

↓

Encode & Insert Auxiliary
Picture in Bitstream

↓

765 — Generate First SEI Message
Related to AUX_ALPHA

↓

770 — Generate Second SEI Message
with Collected Data Related to AM

↓

780 — Encode & Insert Both SEI
Messages in Bitstream

↓

Bitstream

# Figure 7

800 ⟍

Bitstream

↓

| Decode Picture | ──→ Decoded Picture |

↓

| Decode SEI Message Corresponding to AUX-ALPHA | ⟍ 820 |

↓

No ←── | Alpha_channel_use_idc = 3? | ⟍ 822

Decoded Picture

↓

Display Model

| Decode SEI Message Corresponding to Attenuation Map | ⟍ 824 |

↓

| Display Model in ami_display_model? | ⟍ 825 |

No ←── ↓ Yes

Send Decoded Picture to Display

| Map Auxiliary AM with Decoded Picture |

↓

| Decode AM from Auxiliary Picture of Type AUX_ALPHA | ⟍ 840 |

Decoded Picture

Decoded AM ←──

| ami_preprocessing_flag? | ──Yes──→ | Upsample AM with the Use of ami_preprocessing_idc |

No ↓

| Rescale Decoded AM |

| Rescale Upsampled AM |

Decoded Picture

| Apply Rescaled AM on Decoded Picture According to ami_attenuation_use_idc and ami_attenuation_comp_idc |

| Apply Upsampled Rescaled AM on Decoded Picture According to ami_attenuation_use_idc and ami_attenuation_comp_idc |

Decoded Picture

↓

Energy Reduced Picture

↓

| Send Reduced Picture to Display |

↓

Figure 8

900

Bitstream

Decode Picture → Decoded Picture

Decode SEI Message

Display Model

Decoded Picture

Display Model in ami_display_model?

Send Decoded Picture to Display ← No    Yes ↓

Map Auxiliary AM with Decoded Picture

Iterate for Current i and for j in ami_comp_number

Decode Auxiliary AM

Decoded AM ↓

ami_preprocessing_flag? — Yes → Upsample AM with the Use of ami_preprocessing_idc

Decoded Picture

No ↓

Decoded AM → Rescale Decoded AM

Rescale Upsampled AM

Decoded Picture → Apply Rescaled AM on Corresponding Component of Decoded Picture According to ami_attenuation _use_idc and ami_ attenuation_comp_idc

970

Apply Upsampled Rescaled AM on Corresponding Component of Decoded Picture According to ami_attenuation _use_idc and ami_ attenuation_comp_idc

980

Recombine Components to form Energy Reduced Picture — 985

Energy Reduced Picture

Send Reduced Picture to Display

# Figure 9

| | Europäisches Patentamt European Patent Office Office européen des brevets | **EUROPEAN SEARCH REPORT** | **Application Number** EP 24 31 5181 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHMED HAMZA (INTERDIGITAL) ET AL: "Carriage of Display Attenuation Maps in ISOBMFF", 144. MPEG MEETING; 20231016 - 20231020; HANNOVER; (MOTION PICTURE EXPERT GROUP OR ISO/IEC JTC1/SC29/WG11), , no. m65429 13 October 2023 (2023-10-13), XP030313030, Retrieved from the Internet: URL:https://dms.mpeg.expert/doc_end_user/d ocuments/144_Hannover/wg11/m65429-v1-m6542 9.zip m65429 - CarriageDisplayAttenuationMapsISOBMFF - r0.docx [retrieved on 2023-10-13] | 1-3,5-7, 10-14 | INV. H04N19/154 H04N19/70 H04N19/156 G06F1/3234 G09G5/00 H04N19/46 H04N19/85 H04N21/443 |
| Y | * paragraphs [2.1.2], [02.2] * ----- | 4,8,9 | |
| Y | "WD of ISO/IEC 23001-11 AMD 2 Energy-efficient media consumption for new display power reduction metadata", 142. MPEG MEETING; 20230424 - 20230428; ANTALYA; (MOTION PICTURE EXPERT GROUP OR ISO/IEC JTC1/SC29/WG11), , no. n22636 5 June 2023 (2023-06-05), XP030310949, Retrieved from the Internet: URL:https://dms.mpeg.expert/doc_end_user/d ocuments/142_Antalya/wg11/MDS22636_WG03_N0 0893.zip WD_ISO_IEC_23001-11_ed.3_ProposedAmendment .docx [retrieved on 2023-06-05] * paragraph [7.4.1.1] * ----- | 4,8,9 | TECHNICAL FIELDS SEARCHED (IPC) H04N |

-/--

The present search report has been drawn up for all claims

| Place of search | Date of completion of the search | Examiner |
|---|---|---|
| Munich | 27 September 2024 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 31 5181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LE MEUR (INTERDIGITAL) O ET AL: "Proposed new amendment of 23001-11 for signaling attenuation map metadata for display energy saving", 142. MPEG MEETING; 20230424 - 20230428; ANTALYA; (MOTION PICTURE EXPERT GROUP OR ISO/IEC JTC1/SC29/WG11), , no. m63305 24 April 2023 (2023-04-24), XP030310420, Retrieved from the Internet: URL:https://dms.mpeg.expert/doc_end_user/documents/142_Antalya/wg11/m63305-v3-m63305.zip m63305_Attenuation_Map_Energy_Reduction.docx [retrieved on 2023-04-24] * paragraph [02.3] * ----- | 9 | |
| A | C-H DEMARTY (INTERDIGITAL) ET AL: "AHG9: Attenuation Map Information SEI for reducing energy consumption of displays", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0122 ; m61700 13 January 2023 (2023-01-13), XP030306682, Retrieved from the Internet: URL:https://jvet-experts.org/doc_end_user/documents/29_Teleconference/wg11/JVET-AC0122-v4.zip 2023-01-AttenuationMap-v2.docx [retrieved on 2023-01-13] * the whole document * ----- | 1-14 | TECHNICAL FIELDS SEARCHED (IPC) |
| | -/-- | | |

The present search report has been drawn up for all claims

| Place of search | Date of completion of the search | Examiner |
|---|---|---|
| Munich | 27 September 2024 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

page 2 of 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LE MEUR OLIVIER ET AL: "Energy-aware images: Quality of Experience vs Energy Reduction", PROCEEDINGS OF THE 28TH ACM SYMPOSIUM ON ACCESS CONTROL MODELS AND TECHNOLOGIES, ACMPUB27, NEW YORK, NY, USA, 7 May 2023 (2023-05-07), pages 46-51, XP059075896, DOI: 10.1145/3588444.3591003 ISBN: 979-8-4007-0196-2 * the whole document * ----- | 1-14 | |
| | | | TECHNICAL FIELDS SEARCHED (IPC) |

The present search report has been drawn up for all claims

| Place of search | Date of completion of the search | Examiner |
|---|---|---|
| Munich | 27 September 2024 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                 
& : member of the same patent family, corresponding document

EPO FORM 1503 03.82 (P04C01)